(19) **Europäisches Patentamt / European Patent Office / Office européen des brevets**

(11) **EP 3 052 455 B1**

(12) **FASCICULE DE BREVET EUROPEEN**

(45) Date de publication et mention de la délivrance du brevet:
**10.06.2026 Bulletin 2026/24**

(21) Numéro de dépôt: **14798952.9**

(22) Date de dépôt: **30.09.2014**

(51) Classification Internationale des Brevets (IPC):
**C04B 35/597** (2006.01)   **C04B 35/581** (2006.01)
**C04B 35/584** (2006.01)   **C04B 35/101** (2006.01)
**C04B 35/103** (2006.01)   **C04B 35/66** (2006.01)

(52) Classification Coopérative des Brevets (CPC):
**C04B 35/101; C04B 35/1015; C04B 35/103; C04B 35/66;** C04B 2235/3222; C04B 2235/3225; C04B 2235/3227; C04B 2235/3821; C04B 2235/383; C04B 2235/3865; C04B 2235/3869; C04B 2235/402; C04B 2235/428; C04B 2235/5427; C04B 2235/5445;   (Cont.)

(86) Numéro de dépôt international:
**PCT/IB2014/064959**

(87) Numéro de publication internationale:
**WO 2015/044929 (02.04.2015 Gazette 2015/13)**

(54) **PRODUIT REFRACTAIRE A MATRICE DE SIAION**

FEUERFESTES PRODUKT MIT SIALON MATRIX

REFRACTORY PRODUCT WITH SIALON MATRIX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2013 FR 1359441**

(43) Date de publication de la demande:
**10.08.2016 Bulletin 2016/32**

(73) Titulaire: **SAINT-GOBAIN CENTRE DE RECHERCHES ET D'ETUDES EUROPEEN**
**92400 Courbevoie (FR)**

(72) Inventeurs:
• **BOUMAHDI, Najih**
  **F-84330 Caromb (FR)**
• **ROULET, Frédéric**
  **F-13300 Salon de Provence (FR)**

(74) Mandataire: **Ipsilon**
**12 Avenue d'Italie**
**75013 Paris (FR)**

(56) Documents cités:
**WO-A1-2011/070524**

• **THOMMY EKSTRÖM AND MATS NYGREN: "SiAlON Ceramics", J. AM. CERAM. SOC.,75[2] 259-76 (1992), 1 January 1992 (1992-01-01), XP002726842**

(52) Classification Coopérative des Brevets (CPC):
(Cont.)C04B 2235/5472; C04B 2235/604;
C04B 2235/608; C04B 2235/6567; C04B 2235/658;
C04B 2235/72; C04B 2235/728; C04B 2235/764;
C04B 2235/77; C04B 2235/80; C04B 2235/9669

(52) Classification Coopérative des Brevets (CPC):

**Description**

## Domaine technique

L'invention se rapporte à un produit fritté réfractaire, notamment sous la forme d'un bloc ainsi que son procédé de fabrication. Elle concerne également l'utilisation de ce produit ou bloc pour la réalisation de revêtements de fours métallurgiques, et en particulier des revêtements de creusets ou de cuve ou de tuyères de hauts-fourneaux, voire d'autres revêtements réfractaires de four, des revêtements réfractaires d'échangeurs thermiques ou encore des supports de cuisson, plus particulièrement des supports de cuisson de produits céramiques ou de poudres métalliques .

## Arrière-plan technologique

On connaît des produits réfractaires composites comportant un granulat réfractaire lié par une matrice liante de type SiAlON. De tels produits sont notamment connus de US 4,533,646, US 3,991,166, US 4,243,621, ou EP 0 153 000. Ces produits sont résistants à l'oxydation par la vapeur d'eau et à l'attaque par les alcalins mais résistent mal à la corrosion.

EP 0 482 984 divulgue un produit réfractaire comprenant un granulat réfractaire lié par une matrice constituée majoritairement de SiAlON de formule $Si_{6-z}Al_zO_zN_{8-z}$, avec $0,5<z<4,0$. Des particules de nitrure de bore (BN) hexagonal et/ou des paillettes de graphite sont dispersées dans la matrice. Un tel produit présente une faible résistance à l'oxydation à la vapeur d'eau.

On connaît aussi de WO96/15999 un produit réfractaire comprenant un granulat réfractaire lié par une matrice constituée majoritairement de SiAlON, d'AlN (ou un de ses polytypes) et des particules de nitrure de titane, et facultativement de nitrure de bore hexagonal, de carbone amorphe et/ou des paillettes de graphite. Un tel produit présente également une faible résistance à l'oxydation par la vapeur d'eau.

On connait de WO 2011 070524 un produit réfractaire fritté comportant un granulat réfractaire lié par une matrice, la matrice représentant au moins 5% et moins de 60% de la masse du produit, ladite matrice comportant, dans sa masse, une phase SiAlON cristallisée, ledit produit comportant une teneur en bore autre que sous la forme d'une phase hexagonale de BN supérieure à 0,05% et inférieure à 3,0%.

De nombreuses publications relatives aux matériaux céramiques portent sur l'utilisation de mélanges de poudres de $Si_3N_4$, AlN, $Al_2O_3$, ou $Y_2O_3$. Ces produits sont cuits en général à haute température et sous pression (EP0735988 ; JPH07165462 ou WO02/074419). Ils présentent parfois une matrice SiAlON avec des particules fines. Cependant ces matériaux sont très chers à produire, présentent un retrait important à la cuisson et rendent la production de blocs ou de plaques extrêmement difficile. Enfin leur tenue au cyclage thermique est limitée.

L'article « SiAlON Ceramics », par Thommy Ekström et Mats Nygren, J. Am. Soc., 75 (2) 259-76 (1992) décrit l'effet d'agents de frittage sur un SiAlON.

Les produits réfractaires décrits dans WO 2011 070524 présentent une tenue à l'oxydation améliorée et des propriétés de résistance à la corrosion satisfaisantes. Cependant leur résistance thermomécanique, en particulier leur tenue au cyclage thermique, est encore insuffisante dans les environnements les plus sévères.

Il existe donc un besoin pour un produit réfractaire présentant un compromis amélioré entre résistance au cyclage thermique et résistance à la corrosion par la fonte, le laitier ou les alcalins, et résistance à l'oxydation à la vapeur d'eau.

Un but de l'invention est de satisfaire ce besoin.

## Résumé de l'invention

Selon l'invention, ce but est atteint au moyen d'un produit réfractaire fritté selon la revendication 1.

Selon un premier aspect, le produit est remarquable en ce qu'il est obtenu par frittage d'une préforme dans laquelle plus de 5%, de préférence plus de 8%, de préférence plus de 10% et, de préférence moins de 25%, moins de 20%, moins de 15% des particules sont des particules d'alumine présentant un diamètre inférieur à 3 $\mu$m, de préférence un diamètre inférieur à 2 $\mu$m, de préférence un diamètre inférieur à 1 $\mu$m, de préférence un diamètre inférieur à 0,5 $\mu$m, en pourcentage massique.

Selon un deuxième aspect, le produit est remarquable en ce que le produit comprend plus de 1%, plus de 2%, plus de 3% et moins de 20%, moins de 17%, voire moins de 15% en masse de grains d'alumine tabulaire, de préférence de grains d'alumine tabulaire présentant une taille inférieure à 0,5 mm, en pourcentage massique sur la base du produit.

Selon un troisième aspect, le produit est remarquable en ce que, lorsque le produit est soumis à une intrusion de mercure à une pression de 2000 bar, puis à une extrusion de ce mercure par réduction de la pression jusqu'à 1 bar, $V_i$ désignant le volume de mercure introduit sous 2000 bar et $V_e$ indiquant le volume de mercure extrudé lors du retour à la pression de 1 bar, le rapport $V_e$ divisé par $V_i$ en pourcentage est inférieur à 18%, voire inférieur à 16%, voire inférieur à 8 %, voire inférieur à 10% et/ou supérieur à 5%, voire supérieur à 7%.

Selon un quatrième aspect, le produit est remarquable en ce que les grains présentant une taille supérieure à 1 mm comportent une couche d'enrobage d'épaisseur moyenne supérieure à 100 $\mu$m (microns) et de préférence inférieure à 300 $\mu$m (microns).

Selon un cinquième aspect, le produit est remarquable en ce que la fraction volumique des pores présentant une taille comprise entre 10 et 100 $\mu$m (microns) est supérieure à 7% du volume total des pores. Cette fraction peut être en particulier déterminée par intrusion de mercure, comme indiqué ci-dessus. De préférence, cette fraction volumique est inférieure à 30%, inférieure à 20%. Cette fraction est particulièrement adaptée pour obtenir des produits réfractaires à matrice azotée cuits par frittage réactif, un tel volume étant très favorable au passage de l'azote lors du frittage et de la nitruration du matériau.

Bien entendu, tous les aspects de l'invention peuvent être combinés.

Comme on le verra plus en détail dans la suite de la description, un produit selon l'invention présente un excellent compromis entre résistance au cyclage thermique et résistance à la corrosion par la fonte, le laitier ou les alcalins et résistance à l'oxydation à la vapeur d'eau. Les exemples ci-après montrent en particulier une résistance à la compression et une résistance au cyclage thermique remarquablement améliorées. La résistance à la corrosion aux métaux en fusion, aux attaques chimiques alcalines et à l'oxydation est également conservée, voire améliorée.

Dans différents modes de réalisation, un **produit** fritté selon l'invention peut encore présenter une ou plusieurs des caractéristiques optionnelles suivantes :

- La matrice représente plus de 20%, plus de 25%, voire plus de 30% de la masse du produit et/ou moins de 40% de la masse du produit. Par définition, le complément est constitué par le granulat ;

- x et/ou u ne sont pas nuls, de préférence ni x, ni u ne sont nuls ;

- La teneur en $Al_2O_3$ dans le produit (mesurée par fluorescence X) est supérieure à 70%, supérieure à 75%, supérieure à 80% et/ou inférieure à 95%, de préférence inférieure à 90%, de préférence inférieure à 85%, en pourcentages en masse sur la base dudit produit ;

- De préférence, le produit comporte plus de 60%, plus de 70%, plus de 75%, et/ou moins de 95%, moins de 90%, moins de 85% d'alumine sous forme de corindon, en pourcentage massique sur la base du produit (mesuré par diffraction X).

- La teneur en ladite phase SiAlON dans le produit est supérieure à 7%, supérieure à 10%, supérieure à 15%, supérieure à 20%, et/ou inférieure à 50%, de préférence inférieure à 40%, de préférence inférieure à 30%, en pourcentages en masse sur la base dudit produit ;

- La teneur en phases des polytypes de l'AlN, notamment 2H, 8H, 12H, 15R, 21R, et 27R, de formule $Si_{x'}Al_{y'}O_{u'}N_{v'}$, dans laquelle les indices stœchiométriques x', y', u' et v', normalisés par rapport à l'indice le plus élevé, sont tels que $0 \leq x' \leq 0,37$ et $0,60 \leq y' \leq 1$ et $0 \leq u' \leq 0,71$ et $0,76 \leq v' \leq 1$ est supérieure à 1%, supérieure à 1,5%, supérieure à 2%, et/ou inférieure ou égale à 6%, en pourcentage en masse sur la base dudit produit ;

- La teneur en phase de type AlN15R dans le produit, est inférieure à 6%, inférieure à 4%, inférieure à 3%, inférieure à 2%, inférieure à 1%, inférieure à 0,5%, inférieure à 0,1%, en pourcentages en masse sur la base dudit produit. La phase du type AlN15R est définie par la formule $Si_{x'}Al_{y'}O_{u'}N_{v'}$, dans laquelle les indices stœchiométriques, normalisés par rapport à l'indice le plus élevé, sont tels que $0,12 \leq x' \leq 0,33$ et $0,78 \leq y' \leq 1$ et $0,33 \leq u' \leq 0,55$ et $0,80 \leq v' \leq 1$ ;

- La teneur en phase de formule $Si_{x''}Al_{y''}O_{u''}N_{v''}$, dans laquelle les indices stœchiométriques, normalisés par rapport à l'indice le plus élevé, sont tels que $0,43 \leq x'' \leq 0,75$ et $0 \leq y'' \leq 1$ et $0 < u'' \leq 1$ et $0,9 \leq v'' \leq 1$, dans le produit, dite « $\beta$'SiAlON », est supérieure à 3%, supérieure à 5%, supérieure à 10%, supérieure à 15% et/ou inférieure à 40%, inférieure à 35%, inférieure à 30%, inférieure à 25%, en pourcentages en masse sur la base dudit produit ;

- La phase cristallisée « $\beta$'SiAlON » peut encore s'exprimer avec la formule $Si_{6-z}Al_zO_zN_{8-z}$, dans laquelle l'indice z est un indice stœchiométrique tel que $0<z<4,2$. De préférence, z est supérieur à 1, voire supérieur à 1,5 et/ou inférieur à 4, voire inférieur à 3,5 ;

- La teneur en phase $Si_2ON_2$, dans le produit, est inférieure à 5%, inférieure à 3%, inférieure à 1%, inférieure à 0,5%, voire sensiblement nulle, en pourcentages en masse sur la base dudit produit ;

- La teneur en phase AlN, dans le produit, est inférieure à 5%, inférieure à 3%, inférieure à 1%, inférieure à 0,5%, voire sensiblement nulle, en pourcentages en masse sur la base dudit produit ;

- La teneur en phase $Si_3N_4$ sous forme alpha ou beta, dans le produit, est inférieure à 5%, inférieure à 3%, inférieure à 1%, inférieure à 0,5%, voire sensiblement nulle, en pourcentages en masse sur la base dudit produit ;

- Dans un mode de réalisation, toutes les phases contenant Si, Al, O, et N, en particulier toutes les phases de la matrice contenant Si, Al, O, et N, sont des phases cristallisées ;

- La teneur en métaux résiduels, en particulier en silicium métallique résiduel, dans le produit, est inférieure à 1,8%, voire inférieure à 1,5%, voire inférieure à 1,0%, voire inférieure à 0,5%, voire inférieure à 0,3%, voire inférieure à 0,2%, en pourcentage massique sur la base du produit ;

- Dans un mode de réalisation, le produit présente une teneur totale en oxydes alcalino-terreux, en particulier en CaO et/ou en MgO, inférieure à 2%, de préférence inférieure à 1,5%, de préférence inférieure à 1,0%, voire inférieure à 0,5%, en pourcentage massique sur la base du produit ;

- Le produit présente une teneur totale en oxydes de métaux alcalins, notamment $Na_2O$ et $K_2O$, inférieure à 1 %, en pourcentage massique sur la base du produit ;

- Le produit présente une teneur en élément azote supérieure à 2,0%, supérieure à 3,0%, supérieure à 4,0 %, voire supérieure ou égale à 5,0%, et/ou inférieure à 12,0%, voire inférieure à 10,0%, en pourcentage massique sur la base du produit ;

- Le produit présente une teneur en un élément choisi dans le groupe constitué par Y, Yb, La, Gd, Dy, Er, Ce, Nd, Pr, Sm, de préférence dans le groupe constitué par Y, Yb, La, Ce, Nd, Pr, Sm, de préférence dans le groupe constitué par Y, Yb, La, supérieure à 0,02%, supérieure à 0,03%, supérieure à 0,05%, supérieure à 0,07%, supérieure à 0,09% et/ou inférieure à 5,00%, inférieure à 3,00%, inférieure à 2,00%, inférieure à 1,00%, en pourcentage massique sur la base du produit ;

- Le produit présente de préférence une teneur en Yttrium, exprimée sous forme $Y_2O_3$, supérieure à 0,01%, supérieure à 0,05%, et/ou inférieure à 5,0%, inférieure à 3,0%, inférieure à 2,5%, inférieure à 2,0%, inférieure à 1,5%, inférieure à 1,0%, en pourcentage massique sur la base du produit ;

- Le produit présente de préférence une teneur en Lanthane exprimée sous forme $La_2O_3$, supérieure à 0,01%, supérieure à 0,05%, et/ou inférieure à 5,0%, inférieure à 3,0%, inférieure à 2,5%, inférieure à 2,0%, inférieure à 1,5%, inférieure à 1,0%, inférieure à 0,5%, en pourcentage massique sur la base du produit ;

- Dans un mode de réalisation, le produit selon l'invention comporte plus de 0,5%, de préférence plus de 1%, de préférence plus de 2%, de préférence plus de 3%, voire plus de 4% et/ou, de préférence, moins de 10%, de préférence moins de 7% de particules fines de SiC, en pourcentages en masse sur la base du produit ; Dans un mode de réalisation, le produit selon l'invention comporte moins de 0,5%, de préférence moins de 0,3%, de préférence moins de 0,1% de particules fines de SiC, en pourcentages en masse sur la base du produit ;

- Le produit présente une teneur en élément bore inférieure à 1,0 %, inférieure à 0,5%, inférieure à 0,4%, inférieure à 0,3%, inférieure à 0,1%, inférieure à 0,05%, en pourcentage massique sur la base du produit ;

- La masse volumique apparente est supérieure à 3,10 $g/cm^3$, supérieure à 3,15 $g/cm^3$, supérieure à 3,20 $g/cm^3$ et/ou inférieure à 3,35 $g/cm^3$, inférieure 3,30 $g/cm^3$, inférieure à 3,28 $g/cm^3$ ;

- La porosité ouverte est supérieure à 9%, supérieure à 11%, supérieure à 11,5% et/ou inférieure à 15%, inférieure à 14%, inférieure à 13,5%, inférieure à 13 %, voire inférieure à 12% ;

- La fraction des pores présentant une taille comprise entre 10 $\mu$m (microns) et 30 $\mu$m (microns) est supérieure à 5% et inférieure à 20% en volume ;

- Le produit fritté est obtenu par frittage d'une préforme fabriquée par pressage, pilonnage, extrusion, coulage, vibration ou issue de la combinaison de ces différentes techniques de façonnage. En particulier le produit peut être un matériau choisi parmi un béton ou un pisé, façonné ou non façonné.

Dans différents modes de réalisation, le **granulat** d'un produit fritté selon l'invention peut encore présenter une ou plusieurs des caractéristiques optionnelles suivantes :

- De préférence, le produit comprend plus de 2%, plus de 3% et/ou moins de 10%, voire moins de 8% en masse de grains d'alumine tabulaire, de préférence présentant une taille inférieure à 0,5 mm ;

- La taille maximale des grains est inférieure à 3,5 mm, de préférence inférieure à 3,0 mm et/ou supérieure à 2,5 mm ;

- De préférence, la fraction des grains présentant une taille comprise entre 1 et 3 mm représente plus de 25%, plus de 30%, voire plus de 40% et/ou moins de 60%, moins de 55%, moins de 50% de la masse du produit ;

- De préférence, la fraction des grains présentant une taille comprise entre 0,1 et 1 mm représente plus de 4%, plus de 8%, plus de 12%, voire plus de 15% et/ou moins de 40%, moins de 35%, moins de 30% de la masse du produit ;

- De préférence, la fraction des grains présentant une taille comprise entre 0,5 et 1 mm représente entre 10% et 20% de la masse du produit ;

- De préférence, la fraction des grains présentant une taille comprise 0,1 et 0,5 mm représente entre 5% et 30%, de préférence entre 7% et 20%, de manière plus préférée entre 8% et 15%, de la masse du produit ;

- De préférence, le granulat présente une température de fusion et de dissociation thermique supérieure à 1700°C ;

- Le granulat est composé pour plus de 70%, voire pour plus de 80%, voire plus de 90%, voire sensiblement 100%, en masse, de grains en un matériau choisi parmi l'alumine, et notamment le corindon, blanc ou noir, ou l'alumine tabulaire, les spinelles, notamment les spinelles alumine-magnésie, l'hibonite, la mullite, les précurseurs de mullite, la mullite dopée avec de la zircone, l'oxyde de chrome, la zircone, le zircon, les nitrures (autres que les nitrures de silicium), le SiAlON, le nitrure de silicium $Si_3N_4$, les carbures, et notamment le carbure de silicium SiC, le carbone amorphe ou sous forme au moins partiellement cristallisée, voire sous forme de graphite, et des mélanges de ces matières, et/ou est composé d'un mélange des grains mentionnés précédemment ;

- Dans un mode de réalisation, le granulat n'est pas azoté ;

- Dans un mode de réalisation, le granulat ne comporte pas de bore ;

- Dans un mode de réalisation, le granulat ne comporte pas de phase SiAlON cristallisée selon la formule précédente $Si_xAl_yO_uN_v$ ;

- Dans un mode de réalisation, le granulat ne comporte pas de phase $Si_3N_4$ et/ou pas de $Si_2ON_2$.

Dans différents modes de réalisation, la **matrice** d'un produit fritté selon l'invention peut encore présenter une ou plusieurs des caractéristiques optionnelles suivantes :

- La matrice est de préférence obtenue par frittage réactif ;

- Plus de 90%, voire plus de 95%, voire plus de 99%, voire sensiblement 100% en masse de la partie cristallisée azotée du produit fait partie de la matrice ;

- La partie de la matrice complémentaire à la partie cristallisée azotée de ladite matrice comprend, voire est constituée, d'un liant hydraulique, d'une résine, en particulier une résine thermodurcissable, ou d'un mélange de ces constituants ;

- La partie cristallisée azotée représente plus de 50%, ou plus de 80%, voire plus de 90%, voire plus de 95%, voire sensiblement 100% de la masse de la matrice, le complément à 100% étant par exemple constitué par des métaux résiduels et des oxydes, en particulier de l'alumine ;

- Les phases de formule $Si_xAl_gO_uN_v$ telle que définie ci-dessus représentent plus de 50%, ou plus de 80%, voire plus de 90%, voire plus de 95%, voire sensiblement 100% de la masse de la matrice, le complément à 100% étant par exemple constitué par des métaux résiduels et des oxydes, en particulier de l'alumine ;

- La phase corindon dans la matrice représente moins de 10%, moins de 5%, voire moins de 2%, voire moins de 1% de la masse de la matrice ;

- Le silicium métallique représente moins de 10%, moins de 5%, voire moins de 2%, voire moins de 1% de la masse de la matrice ;

- La phase AlN représente, dans la matrice, moins de 5%, de préférence moins de 3% de la masse de la matrice ;

- L'alumine, le silicium métallique, et les phases de formule $Si_xAl_yO_uN_v$, telle que définie ci-dessus, représentent ensemble plus de 80% de la masse de la matrice ;

- La phase $\beta$'SiAlON représente plus de 60%, ou plus de 70%, voire plus de 75% de la masse de la matrice ;

- Les phases $\beta$'SiAlON et du type AlN15R représentent ensemble plus de 80%, voire plus de 90%, voire plus de 95%, ou plus de 99%, voire sensiblement 100% de la masse de la matrice, le complément à 100% étant de préférence constitué par d'autres phases azotées, notamment BN, TiN, $Si_3N_4$, ZrN, $Si_2ON_2$, O'SiAlON de formule $Si_{2-z}Al_zO_{z+1}N_{2-z}$ avec z > 0 ou X SiAlON (voir US 5,521,129), éventuellement des traces d'alumine, voire de silice, les impuretés et des traces éventuelles d'aluminium et/ou de silicium métalliques ;

- La teneur en phase AlN15R, et/ou en phase $Si_2ON_2$ et/ou en phase AlN et/ou en phase $Si_3N_4$ et/ou en phase hexagonale de BN, dans la matrice, est inférieure à 20%, inférieure à 10%, inférieure à 5%, inférieure à 1%, inférieure à 0,5%, voire sensiblement nulle, en pourcentages en masse sur la base de ladite matrice ;

- Dans un mode de réalisation, la matrice comporte des particules de carbure de silicium SiC dispersées dans la matrice. De préférence, les particules de SiC présentent une taille médiane comprise entre 0,1 et 100 $\mu$m (microns), de préférence inférieure à 30 $\mu$m (microns), de manière encore plus préférée, inférieure à 10 $\mu$m (microns).

La divulgation concerne également une préforme présentant une composition adaptée pour conduire, par frittage réactif, en particulier sous atmosphère réductrice d'azote, à un produit selon l'invention, ladite préforme comportant plus de 5%, de préférence plus de 8%, de préférence plus de 10% et, de préférence moins de 25%, moins de 20%, moins de 15% de particules d'alumine présentant un diamètre inférieur à 3 $\mu$m, de préférence un diamètre inférieur à 2 $\mu$m, de préférence un diamètre inférieur à 1 $\mu$m, en pourcentage massique sur la base de la matière minérale sèche.

Dans un mode de réalisation, l'invention concerne un bloc fritté dont au moins une partie, voire la totalité, est constituée par un produit selon l'invention. Un bloc fritté selon l'invention peut encore présenter une ou plusieurs des caractéristiques optionnelles suivantes :

- Le bloc selon l'invention peut présenter différentes formes, notamment de pièces ou de briques, de gros blocs ou de plaques minces ;

- Le bloc fritté présente une épaisseur « e » inférieure à 100 mm, inférieure à 50 mm, voire inférieure à 25 mm. Il peut en particulier présenter la forme d'une plaque dont au moins une partie, de préférence la totalité, est constituée par un produit fritté selon l'invention ;

- Le bloc présente une surface extérieure de forme générale convexe, par exemple une forme parallélépipédique, ou une surface extérieure de forme générale présentant des concavités. Autrement dit, la surface extérieure du bloc comporte des concavités modifiant sa forme générale. Par exemple le bloc peut être de section transversale en forme de « U », de « + », ou de « X ». Le bloc peut présenter, localement, un ou plusieurs trous, traversants ou non traversants, par exemple en forme d'alvéole ou de trou tubulaire, rectiligne ou non, par exemple prévus pour faciliter le passage éventuel d'un fluide (liquide ou gaz) ou augmenter les surfaces d'échange thermique ;

- Le bloc est un "gros" bloc qui présente au moins une dimension (épaisseur, longueur, ou largeur) d'au moins 120 mm, de préférence d'au moins 150 mm, voire 200 mm, voire 300 mm, voire 400 mm, voire 600 mm ou même 800 mm, voire encore 1000 mm. En particulier l'épaisseur, la longueur et la largeur du gros bloc peuvent être d'au moins 120 mm, voire 150 mm, voire 300 mm, voire 400 mm, 600 mm ou même 800 mm, voire encore 1000 mm. L'utilisation de gros blocs permet avantageusement de réduire le nombre de joints par rapport à un assemblage de briques réfractaires. Les attaques corrosives par l'intermédiaire des joints sont ainsi limitées. L'utilisation de gros blocs permet également une installation rapide du revêtement réfractaire. Enfin, la fabrication de gros blocs permet, sans modifier l'environnement autour de la préforme, de fabriquer des blocs hétérogènes très performants. Dans de tels blocs hétérogènes, seule la région centrale est de préférence en un produit fritté selon l'invention ;

- Notamment pour la fabrication de gros blocs, la taille médiane des grains du granulat est supérieure à 2 mm, voire supérieure à 4 mm et/ou inférieure à 15 mm, inférieure à 10 mm, ou inférieure à 6 mm ;

- Notamment pour la fabrication de produits minces comme des plaques, la taille médiane des particules est supérieure à 5 $\mu$m, voire supérieure à 10 $\mu$m, supérieure à 30 $\mu$m ou supérieure à 50 $\mu$m et/ou inférieure à 3 mm, inférieure à 2 mm, inférieure à 1 mm, inférieure à 500 $\mu$m, voire inférieure à 100 $\mu$m ;

- Une région centrale du bloc fritté est en un produit fritté conforme à l'invention ;

- Une région périphérique du bloc fritté n'est pas en un produit fritté conforme à l'invention ;

- La région périphérique est en un produit fritté conforme à l'invention ;

- Dans un mode de réalisation, tout le bloc fritté, sauf la couche superficielle s'étendant, à partir de la surface, sur une épaisseur supérieure à 1 mm, de préférence supérieure à 5 mm, de manière encore plus préférée supérieure à 20 mm, est en un produit fritté conforme à l'invention.

L'invention concerne encore un procédé de fabrication d'un produit fritté, notamment d'un bloc fritté, selon l'invention, ledit procédé comportant les étapes successives suivantes :

a) préparation d'une charge de départ comportant entre 5% et 20%, de préférence plus de 5%, de préférence plus de 10% et/ou moins de 15% d'une poudre de particules d'alumine présentant un diamètre médian inférieur à 3 $\mu$m, en particulier une poudre d'alumine réactive, et, de préférence, entre 1 et 15% d'une poudre de particules d'alumine tabulaire, en pourcentage sur la base de la masse minérale sèche, et mélange à une température maintenue inférieure à 70° C, de préférence inférieure à 60° C, de préférence inférieure à 50 C ;

b) versement de ladite charge de départ dans un moule ;

c) mise en forme de la charge de départ à l'intérieur du moule, par compaction, de manière à former une préforme présentant une humidité comprise entre 2,5% et 5,0% ;

d) démoulage de ladite préforme ;

e) optionnellement, séchage de la préforme, de préférence de manière jusqu'à ce que l'humidité résiduelle soit comprise entre 0 et 0,5% ;

f) cuisson de la préforme sous atmosphère réductrice d'azote ou sous atmosphère non oxydante si de l'azote est apporté par la charge de départ, de préférence à une température comprise entre 1300 et 1600°C, de manière à obtenir le produit fritté.

Dans différents modes de réalisation, le procédé selon l'invention peut encore présenter une ou plusieurs des caractéristiques optionnelles suivantes :

- A l'étape a), les constituants de la charge de départ sont de préférence introduits dans l'ordre suivant :

  1. Ajout du granulat et des additifs temporaires (qui disparaîtront lors du frittage), et en particulier des liants et plastifiants ;
  2. Ajout de l'eau ;
  3. Ajout des particules fines ;

Cet ordre d'introduction permet avantageusement d'obtenir une très grande homogénéité de la charge de départ ;

- A l'étape c), la pression exercée sur la charge de départ est comprise entre 350 et 850 kg/cm$^2$ ;

- A l'étape c), la préforme présente une humidité comprise en 2,6% et 3,8% ;

- De préférence, la charge de départ comporte plus de 5%, plus de 10%, plus de 15%, voire plus de 20% et/ou moins de 30%, moins de 25% de particules présentant un diamètre compris entre 0,1 et 1 mm ;

- De préférence, on ajoute à la charge de départ moins de 5%, moins de 2%, voire moins de 1% d'une poudre de particules d'alumine présentant un diamètre médian inférieur à 20 $\mu$m (microns), voire inférieur à 15 $\mu$m (microns), et supérieur à 1 $\mu$m (micron), supérieur à 3 $\mu$m (microns), en particulier une poudre de particules d'alumine calcinée ;

- De préférence, on ajoute à la charge de départ plus de 5%, plus de 7%, plus de 10% et/ou moins de 15% d'une poudre de particules d'alumine présentant un diamètre médian inférieur à 3 $\mu$m (microns), de préférence inférieur à 1 $\mu$m (micron), de préférence inférieur à 0,5 $\mu$m, en particulier une poudre de particules d'alumine réactive ;

- De préférence, on ajoute à la charge de départ plus de 2%, plus de 3%, et/ou moins de 20%, moins de 15% d'une poudre d'alumine présentant un diamètre médian compris entre 50 et 400 $\mu$m, de préférence compris entre 80 et 300 $\mu$m. De préférence, cette alumine est une alumine tabulaire ;

- De préférence, on ajoute à la charge de départ plus de 5%, de préférence plus de 10% et/ou moins de 15% d'une poudre de particules d'alumine réactive ;

- De préférence, la charge de départ comporte plus de 5%, plus de 7% et/ou moins de 20%, moins de 15% de silicium métallique ;

- De préférence, la charge de départ comporte plus de 1%, plus de 2% et/ou moins de 10%, moins de 5% d'aluminium métallique ;

- De préférence, la charge de départ comporte plus de 0,1% et/ou moins de 5%, moins de 4%, moins de 2%, moins de 1%, voire moins de 0,5%, moins de 0,3% d'un composé d'yttrium ;

- Ledit composé d'yttrium est choisi dans le groupe constitué des oxydes d'yttrium, des nitrates d'yttrium, éventuellement sous forme hydratée $Y(NO_3)_3.H_2O$, des phosphates d'yttrium, par exemple $YPO_4$, des YAG, des silicates d'yttrium, et des fluorures d'yttrium, par exemple $YF_3$, de préférence est de l'oxyde d'yttrium $Y_2O_3$ ;

- De préférence, la charge de départ comporte plus de 0,1% et/ou moins de 5%, moins de 4%, moins de 2%, moins de 1%, voire moins de 0,5%, moins de 0,3% d'un composé de lanthane ;

- Ledit composé de lanthane est choisi dans le groupe constitué des oxydes de lanthane, des nitrates de lanthane, des phosphates de lanthane, des silicates de lanthane, des fluorures de lanthane, de préférence est de l'oxyde de lanthane $La_2O_3$

L'invention concerne enfin un dispositif comportant, voire étant constitué par, un produit selon l'invention ou fabriqué ou pouvant être fabriqué suivant un procédé selon l'invention, ledit dispositif étant choisi parmi :

- un revêtement intérieur réfractaire d'un four, en particulier d'un four métallurgique, notamment d'un haut-fourneau et, en particulier un revêtement intérieur d'un étalage ou d'une ceinture d'une tuyère ou d'un creuset ;
- un revêtement d'un four de cuisson d'anodes, notamment destinées à l'électrolyse, par exemple de l'aluminium, ou un cubilot destiné à la refonte de métaux ou à la fusion de roches ;
- un revêtement d'un échangeur thermique ;
- un revêtement d'un incinérateur d'ordures ménagères ;
- un revêtement anti-abrasion ;
- une pièce céramique intervenant dans un dispositif de protection ou de régulation des jets de fonte ou d'acier, par exemple une plaque d'obturateur à tiroir, un tube protecteur de jet, une busette immergée ou une quenouille ;
- une pièce céramique intervenant dans un dispositif de brassage, soit mécanique, soit par insufflation de gaz, dans le métal en fusion ;
- une brique de siège servant de logement et de support à un dispositif d'insufflation de gaz ou à un dispositif d'insufflation de régulation d'un jet de métal, ainsi qu'une dalle d'impact de poche ou de répartiteur ;
- un étalage, une ceinture d'une tuyère, un creuset, un ventre, une cuve d'un haut-fourneau ;
- un accessoire pour la fonderie de la fonte, de l'acier et des aciers spéciaux tel qu'une busette, un tampon ou un déversoir ;
- un support pour la cuisson de produits céramiques ou de poudres métalliques, de préférence sous la forme d'un produit mince.

La divulgation concerne aussi un dispositif choisi parmi un four, un échangeur thermique et un support pour la cuisson de produits céramiques, remarquable en ce qu'il comporte un produit selon l'invention. Le four peut être en particulier un four d'incinérateur, un four métallurgique, notamment un haut-fourneau ou un four de cuisson d'anodes. L'échangeur thermique peut notamment être celui d'un incinérateur d'ordures ménagères.

## Définitions

Les « grains » et les « particules fines » forment ensemble les « particules ».

On appelle « frittage » un traitement thermique par lequel le produit forme une microstructure constituée d'un granulat dont les grains sont solidarisés au moyen d'une matrice. Un produit fritté selon l'invention comporte une matrice contenant au moins une phase SiAlON, de formule $Si_xAl_yO_uN_v$ telle que définie ci-dessus, obtenue par frittage sous atmosphère non oxydante si de l'azote est apporté par au moins un des constituants de la charge de départ ou par frittage sous azote, de préférence à une température comprise entre 1300 et 1600°C, ce dernier type de procédé, permettant un frittage réactif sous azote, étant bien connu de l'homme du métier.

Par « frittage sous azote », on entend un frittage dans un environnement gazeux comportant plus de 90%, de préférence plus de 95% ou, de préférence encore, sensiblement 100% d'azote, en pourcentage volumique. Un tel environnement gazeux est appelé « environnement azoté ».

On qualifie de « résiduel » un constituant présent dans la charge de départ et encore présent dans le produit fritté obtenu à partir de cette charge de départ.

Dans un produit fritté selon l'invention, on appelle « granulat » l'ensemble des grains réfractaires liés par la matrice et qui, lors du frittage, ont sensiblement conservé la forme et la nature chimique qu'ils présentaient dans la charge de départ. Ainsi, en fonction de la taille de ses particules par exemple, une poudre, par exemple d'alumine, pourrait être considérée comme un granulat ou comme un précurseur de la matrice. En particulier, les grains du granulat ne sont pas complètement fondus ou transformés pendant le frittage.

Par extension, on appelle également « granulat » l'ensemble de ces grains tels qu'ils se présentaient dans la charge de départ. La nature du granulat dans un produit fritté selon l'invention n'est pas limitative, pourvu que les grains de granulat soient en un matériau réfractaire, c'est-à-dire présentant un point de fusion ou de dissociation supérieur à 1500°C.

Dans un mode de réalisation de l'invention, le granulat est une matière différente des constituants de la matrice.

Dans un autre mode de réalisation de l'invention, le granulat est en une matière identique à certains des constituants de la matrice. Par exemple, le granulat peut incorporer une phase cristallisée azotée comportant une phase SiAlON. Une observation en coupe permet cependant de distinguer la matrice du granulat sans connaître le procédé de fabrication, le granulat présentant généralement une taille médiane très supérieure à celle des particules de la matrice, classiquement au moins 2 fois, au moins 5 fois, voire au moins 10 fois supérieure.

Par « matrice », on entend une phase cristallisée ou non, assurant une structure sensiblement continue entre les grains du granulat et obtenue, lors du frittage, à partir des constituants de la charge de départ et éventuellement des constituants de l'environnement gazeux de cette charge de départ. Une matrice entoure sensiblement les grains du granulat, c'est-à-dire les enrobe. Dans le produit fritté, la matrice et le granulat représentent ensemble 100% de la masse du produit.

La « matrice » désigne la phase liante résultant du frittage et doit donc être distinguée de la phase liante éventuellement présente avant frittage, par exemple du fait de l'activation d'un liant hydraulique ou polymérisation d'une résine. Un frittage d'un granulat en SiAlON ne conduit pas à une « matrice » en SiAlON. Par exemple, les procédés de fabrication décrits dans EP 0 242 849, JP 07126072, US 4 871 698, ou JP 07069744 ne conduisent pas à une matrice en SiAlON.

Une matrice obtenue par frittage réactif présente des particularités. Notamment, lors du frittage réactif, il se produit une nitruration des métaux précurseurs des phases cristallisées azotées. L'augmentation de volume qui en résulte, typiquement de 1 à 30%, permet avantageusement de combler les pores de la matrice et/ou de compenser le retrait occasionné par le frittage des grains. Le frittage réactif permet ainsi d'améliorer la résistance mécanique du produit fritté. Les produits frittés réactivement présentent ainsi une porosité ouverte et/ou fermée significativement plus faible que celle(s) des autres produits frittés dans des conditions de température et de pression similaires. A la cuisson, les produits frittés réactivement ne présentent sensiblement pas de retrait.

On appelle « précurseur de la matrice » un constituant de la charge de départ qui se retrouve dans la matrice du produit fritté fabriqué ou qui, lors de cette fabrication, est transformé en un constituant de ladite matrice.

Une matrice peut comprendre des particules ajoutées dans la charge de départ et n'ayant pas réagi pendant le frittage. Par exemple une observation au microscope à balayage et des techniques de type EDS ou EDX ou de microdiffraction X montrent que la matrice d'un produit comportant un granulat de corindon comporte généralement des particules d'alumine. De manière similaire, la matrice d'un produit comportant un granulat réfractaire oxyde, par exemple d'alumine cristallisée, et notamment de corindon et/ou d'alumine tabulaire peut comporter des particules de carbure de silicium.

La « partie cristallisée azotée » d'un produit comprend l'ensemble des phases cristallisées d'un produit. L'étude de la composition d'un produit par diffraction X conduit à des pourcentages sur la base de l'ensemble des phases cristallisées. La diffraction X permet également de déterminer la nature des phases cristallisées, et donc d'établir des compositions sur la base de la partie cristallisée azotée.

Dans une formule de SiAlON, les indices, par exemple les indices x, y, u et v, sont stœchiométriques et normalisés par rapport à celui qui est le plus élevé, rendu égal à 1.

Cette définition de la phase SiAlON exclut en particulier $Si_3N_4$ et $Si_2ON_2$. Du $Si_3N_4$ et du $Si_2ON_2$ peuvent cependant être présents dans le produit, notamment dans le granulat.

Lorsqu'il est fait mention d'« une » phase définie par une formule générique, par exemple une phase de formule $Si_xAl_yO_uN_v$, ou $\beta'$-SiAlON ou AlN15R, il est fait référence à l'ensemble des phases cristallisées respectant cette formule.

Le volume de pores ($V_i$) est mesuré par intrusion de Mercure à 2000 bars à l'aide d'un porosimètre à mercure Autopore IV série 9500 Micromeritics, sur un échantillon de $1cm^3$ prélevé dans un bloc du produit, la région de prélèvement excluant la peau s'étendant typiquement jusqu'à 500 $\mu$m (microns) depuis la surface du bloc. La norme applicable est l'ISO 15901-1.2005 part 1. L'augmentation de pression jusqu'à haute pression conduit à « pousser » le mercure dans des pores de taille de plus en plus petite. L'intrusion du mercure se fait classiquement en deux étapes. Dans un premier temps, une intrusion de mercure est réalisée en basse pression jusqu'à 44 psia (environ 3 bar), en utilisant une pression d'air pour introduire le mercure dans les plus gros pores (>4$\mu$m). Dans un deuxième temps, une intrusion à haute pression est réalisée avec de l'huile jusqu'à la pression maximale de 30000 psia (environ 2000 bar). En application de la loi de Washburn mentionnée dans la norme ISO 15901-1.2005 part 1 un porosimètre à mercure permet ainsi d'établir une distribution de tailles des pores en volume.

Le volume de pores par extrusion ($V_e$) peut être mesuré selon la méthode suivante : Après la fin de l'étape d'intrusion décrite précédemment, la pression est diminuée jusqu'au retour à la pression atmosphérique (1 bar), ce qui provoque la sortie d'une partie du mercure de la porosité de l'échantillon. Sur les courbes classiques de répartition volumique en fonction de la taille de pores, le volume de pores par extrusion ($V_e$) correspond à la différence entre le volume introduit dans les pores à 2000 bar (Vi) et le volume de mercure de mercure résiduel à la pression de 1 bar lors de la réduction de la pression jusqu'à la pression atmosphérique.

Dans une poudre, le diamètre des particules est donné classiquement par une caractérisation de distribution granulométrique, par exemple au moyen d'un granulomètre laser. Cette caractérisation fournit également le diamètre médian et le diamètre maximal de la poudre.

Dans une préforme, le diamètre des particules d'un ensemble de particules est celui de la poudre correspondante (c'est-à-dire de l'ensemble de particules avant mise en forme).

Dans un produit fritté, la taille d'un grain ou d'une particule fine est mesurée par observation au microscope optique ou au microscope à balayage d'une coupe du produit. La taille d'un grain ou d'une particule fine correspond à la moyenne de la plus petite dimension et de la plus grande dimension dudit grain ou de ladite particule fine mesurées dans le plan de coupe.

Les alumines calcinées, réactives et tabulaires sont parfaitement connues de l'homme du métier et disponibles dans le commerce.

L'alumine calcinée est obtenue à partir de bauxite traitée selon le procédé Bayer suivi d'une calcination à une température typiquement entre 1000 et 1250°C afin d'éliminer les hydrates et obtenir une poudre principalement cristallisée sous forme $Al_2O_3$ alpha.

L'alumine tabulaire est une alumine calcinée frittée sous air à une température supérieure à 1600°C et suffisamment longtemps pour que son retrait n'augmente plus. La morphologie des cristaux de cette alumine en tablettes hexagonales allongées est à l'origine de sa dénomination.

L'alumine réactive est classiquement obtenue par broyage d'alumine calcinée. Les poudres de particules d'alumine réactive présentent classiquement un diamètre médian inférieur à 2 $\mu$m (microns), de préférence inférieur à 1 $\mu$m (micron).

Les percentiles ou « centiles » 10 ($A_{10}$), 50 ($A_{50}$), 90 ($A_{90}$) et 99,5 ($A_{99,5}$), et plus généralement « n » $A_n$ d'une propriété A d'une population, par exemple d'une population de particules ou de pores sont les valeurs de cette propriété correspondant aux pourcentages, en nombre, de 10%, 50%, 90%, 99,5 % et n%, respectivement, sur la courbe de distribution cumulée relative à cette propriété, les valeurs relatives à cette propriété étant classées par ordre croissant. Par exemple, 10%, en masse, des particules ont une taille inférieure au percentile 10 et 90% des particules en masse ont une taille supérieure ou égale à ce percentile.

En particulier, les percentiles peuvent être relatifs à des tailles ou des diamètres de particules. Les pourcentages sont alors en masse.

Le percentile 50 est classiquement appelé le percentile « médian ».

Le percentile 99,5 est classiquement appelé le percentile « maximal ».

On appelle « compaction » toute méthode de mise en forme, notamment par pressage, extrusion, coulage, vibration, pilonnage ou par une technologie combinant ces différentes techniques.

On appelle "gros bloc" un bloc présentant une forme telle que la plus grande sphère inscrite dans le volume de matière dudit bloc présente un diamètre d'au moins 150 mm. Autrement dit, il est possible d'extraire d'un gros bloc une sphère pleine de matière et présentant un diamètre d'au moins 150 mm.

Sauf mention contraire, tous les pourcentages relatifs à la composition du produit, fritté ou non, relatifs à la matrice, relatifs à une poudre ou relatifs à la charge de départ, sont des pourcentages massiques.

Sauf indication contraire, tous les pourcentages de la charge de départ sont fournis sur la base de la matière minérale sèche.

Par « comportant », il y a lieu de comprendre « comportant au moins », sauf indication contraire. Par exemple, la matrice d'un produit selon l'invention peut comporter plusieurs phases SiAlON.

**Brève description des figures**

D'autres caractéristiques et avantages de l'invention apparaîtront encore à la lecture de la description détaillée qui va suivre et à l'examen du dessin annexé dans lequel :

- la figure 1 représente une coupe d'un produit selon l'invention ;
- la figure 2 représente schématiquement un détail de la figure 1 ;
- la figure 3 représente la courbe de distribution des pores pour les produits de certains exemples ; la taille des pores est fournie en abscisse et le volume cumulé de mercure introduit dans les pores et ensuite extrudé, en pourcentage de volume total, est fourni en ordonnées.

**Description détaillée**

Pour fabriquer un produit réfractaire fritté selon l'invention, on peut procéder suivant les étapes décrites précédemment.

A l'étape a), les matières particulaires sont classiquement mélangées jusqu'à obtention d'un mélange homogène.

La nature et les quantités de matières premières sont déterminées de manière à ce que le bloc en produit réfractaire obtenu à l'issue de l'étape f) soit conforme à l'invention.

La façon de déterminer les proportions des constituants de la charge de départ est parfaitement connue de l'homme du métier. Par exemple, l'homme du métier sait que le carbure de silicium présent dans la charge de départ se retrouve dans le produit fritté. Il sait également déterminer quels constituants vont se transformer pour constituer la matrice.

Certains oxydes peuvent être apportés par les additifs classiquement utilisés pour fabriquer des produits, par exemple les agents de frittage, les dispersants comme les polyphosphates de métaux alcalins ou les dérivés méthacrylates. La composition de la charge de départ peut donc varier, notamment en fonction des quantités et de la nature des additifs présents, ainsi que du degré de pureté des matières premières utilisées.

La nature du granulat n'est pas limitative.

De préférence, le granulat est composé pour plus de 70%, voire pour plus de 80%, voire plus de 90%, voire pour sensiblement 100%, en masse, de grains d'alumine, et notamment de corindon, blanc ou noir, ou d'alumine tubulaire, et/ou de mullite ou de précurseurs de mullite, et/ou d'oxyde de chrome, et/ou de zircone, et/ou de zircon et/ou de nitrures, et notamment de nitrure de silicium $Si_3N_4$, et/ou de carbures, et notamment de carbure de silicium SiC. Il peut aussi être formé par des grains constitués d'un mélange des constituants précédents.

Dans un mode de réalisation, le granulat comporte des grains de corindon et/ou de carbure de silicium SiC, voire est constitué de tels grains.

Dans un mode de réalisation, et notamment lorsqu'une conductivité thermique élevée ou est recherchée, par exemple pour fabriquer une paroi d'un four de fabrication d'anodes destinées à l'électrolyse de l'aluminium ou un revêtement d'incinérateur d'ordures ménagères ou celui d'un échangeur thermique, le granulat comporte des grains de carbure de silicium SiC, voire est constitué de tels grains. Le produit peut alors comporter plus de 5% de grains de SiC, en pourcentage en masse sur la base du produit.

Dans un mode de réalisation, au moins 90% en masse des grains du granulat du produit ont une taille comprise entre 150 $\mu$m et 15 mm.

Outre le granulat, la charge de départ peut comporter de l'alumine calcinée, de préférence en une quantité inférieure à 5%, de préférence inférieure à 3%, de préférence inférieure à 1%, en pourcentage massique sur la base de la matière minérale sèche de la charge de départ. La source d'alumine calcinée présente de préférence un diamètre médian

inférieur à 10 μm (microns).

Selon l'invention, la charge de départ comporte entre 5 et 20% d'alumine réactive.

De préférence, la charge de départ comporte entre 1 et 15% d'alumine tabulaire.

La charge de départ peut encore comporter du silicium métallique, présentant de préférence un diamètre médian inférieur à 100 μm (microns) et/ou supérieur à 20 μm (microns), voire supérieur à 50 μm (microns), de préférence en une quantité supérieure à 5%, de préférence supérieure à 7%, de préférence supérieure à 9%, de préférence supérieure à 10%, et/ou inférieure à 20%, de préférence inférieure à 15%, de préférence inférieure à 13%, de préférence inférieure à 12%, en pourcentage massique sur la base de la matière minérale sèche de la charge de départ.

La charge de départ peut également comporter de l'aluminium métallique, présentant de préférence un diamètre médian inférieur à 100 μm (microns) et/ou supérieur à 20 μm (microns), voire supérieur à 50 μm (microns), de préférence en une quantité supérieure à 0,5%, de préférence supérieure à 1,0%, de préférence supérieure à 1,5%, de préférence supérieure à 2%, et/ou inférieure à 10%, de préférence inférieure à 7%, de préférence inférieure à 5%, de préférence inférieure à 4,5%, de préférence inférieure à 4%, de préférence inférieure à 3,5%, de préférence inférieure à 3%, en pourcentage massique sur la base de la matière minérale sèche de la charge de départ.

De préférence, le rapport massique de la quantité de silicium métallique sur celle d'aluminium métallique dans la charge de départ est supérieur à 1,0, préférence supérieur à 1,5, préférence supérieur à 2,0, préférence supérieur à 2,5, voire supérieur à 3,0, et/ou inférieur à 6,0, de préférence inférieur à 5,0, de préférence inférieur à 4,5, de préférence inférieur à 4,0.

Le Silicium et l'Aluminium peuvent être apportés au moins en partie sous forme d'alliage métallique AlSi.

Ces quantités d'alumine, de silicium métallique et d'aluminium métallique se sont avérées particulièrement adaptées pour améliorer la résistance aux chocs thermiques sévères.

Des additifs de mise en forme peuvent être utilisés. Ces additifs comprennent des plastifiants, par exemple des amidons modifiés ou des polyéthylènes glycol et des lubrifiants, par exemple des huiles solubles ou des dérivés de stéarates.

Les additifs comprennent également, classiquement, un ou plusieurs liants dont la fonction est de former avec les matières premières de la charge une masse suffisamment rigide pour conserver sa forme jusqu'à la fin de l'étape c). Le choix du liant est dépendant de la forme souhaitée. Tout liant connu ou mélange de liants connus peut être utilisé. Les liants sont de préférence « temporaires », c'est-à-dire qu'ils sont éliminés en tout ou en partie lors des étapes de séchage et de cuisson de la pièce. De préférence encore, au moins l'un des liants temporaires est une solution de dérivés d'amidon modifié, une solution aqueuse de dextrine ou de dérivés de la lignone, en particulier une solution aqueuse de carboxyméthyl-cellulose ou de lignosulfate de calcium, une solution d'un agent de synthèse tel que l'alcool de polyvinyle, une résine phénolique ou une autre résine de type époxy, un alcool furfurylique, ou un mélange de ceux-ci.

De préférence encore, la quantité de liant, notamment de liant temporaire, et/ou de plastifiant est comprise entre 0,5 et 7%, de préférence inférieure à 4%, en pourcentage en masse sur la base de la matière minérale sèche de la charge de départ.

Un liant hydraulique de type ciment à base de chaux, par exemple un ciment réfractaire, peut être avantageux pour assurer le durcissement des produits sous forme de gros blocs après façonnage et conférer une bonne résistance mécanique au produit fritté. La teneur totale en oxydes alcalino-terreux, et notamment en CaO, dans la charge de départ peut être supérieure à 0,2%, en pourcentage en masse par rapport à la masse minérale sèche de la charge de départ.

Le silicium de la matrice peut notamment être apporté, au moins en partie, par une poudre de silicium métal. Avantageusement, la mise en œuvre d'aluminium métallique permet d'obtenir, après frittage, une matrice stable et entourant bien les grains du granulat. Des alliages mixtes contenant les éléments silicium et/ou aluminium peuvent également être utilisés.

La charge de départ sèche est malaxée à sec suffisamment pour obtenir un mélange homogène. De préférence, les constituants sont introduits dans un ordre particulier : granulats et additifs, puis eau, puis poudres de particules fines, les ajouts étant séparés par un malaxage permettant d'homogénéiser.

De préférence, l'eau est ajoutée progressivement dans le malaxeur en fonctionnement. Dans un mode de réalisation, on ajoute plus de 2%, de préférence plus de 2,5%, et/ou moins de 10%, ou moins de 8%, ou encore moins 5%, d'eau, en pourcentages en masse par rapport à la masse minérale de la charge de départ sèche. Le malaxage de la charge de départ est poursuivi jusqu'à obtention d'un mélange humide sensiblement homogène.

La réaction des poudres métalliques peut conduire à une augmentation de la température. De préférence, la température du mélange est contrôlée de manière à ce qu'elle reste toujours inférieure à 70°C, de préférence inférieure à 60°C ou même inférieure à 50°C. Avantageusement, ce contrôle évite une détérioration des additifs et une mauvaise dispersion de l'alumine réactive. Le contrôle peut résulter d'une adaptation de l'intensité du malaxage ou d'un refroidissement extérieur, par exemple par ventilation.

A l'étape b), le mélange humide est coulé dans un moule conformé pour la fabrication d'un produit aux dimensions souhaitées,

A l'étape suivante de compaction c), le mélange dans le moule est compacté, de préférence par pressage. Dans le cas de gros blocs, une technique bien adaptée est la mise en forme par vibration ou "vibro-coulage", notamment en utilisant classiquement une aiguille vibrante comme celles utilisées dans le génie civil.

La préforme est ensuite démoulée (étape d)), puis mise à sécher (étape e)). Le séchage peut être effectué à une température modérément élevée. De préférence, il est effectué à une température comprise entre 110 et 200°C, de préférence sous air ou atmosphère contrôlée en humidité. Il dure classiquement entre 10 heures et une semaine selon le format de la préforme, de préférence jusqu'à ce que l'humidité résiduelle de la préforme soit inférieure à 1%, de préférence inférieure à 0,5%.

La préforme démoulée présente avantageusement une résistance mécanique suffisante pour pouvoir être manipulée, transportée et éventuellement assemblée.

A l'étape f), la préforme obtenue à l'issue de l'étape e) est disposée dans un four. La durée de la cuisson, généralement comprise entre 3 et 15 jours environ de froid à froid, est variable en fonction des matériaux, mais aussi de la taille et de la forme du bloc. La cuisson s'effectue de préférence sous gaz de diazote pur, appelé couramment "azote". Le cycle de cuisson est de préférence effectué à une température inférieure à la température de fusion ou de dissociation du granulat. Il est de préférence effectué sous une pression d'azote absolue voisine de 1 bar environ, mais une pression plus forte ou plus faible pourrait aussi convenir, et à une température comprise entre 1300°C et 1600°C.

La région périphérique de la préforme est en contact avec l'environnement azoté. Pendant la cuisson, l'azote de cet environnement réagit (« frittage réactif ») avec certains des constituants de la préforme, en particulier avec l'alumine calcinée, la silice sous forme micronique et les poudres métalliques, pour former une matrice et ainsi lier les grains du granulat. Cette réaction est appelée « nitruration ».

A l'issue de l'étage de cuisson, on obtient un bloc fritté selon l'invention.

En variante, et bien que cela puisse s'avérer délicat en pratique, la préforme obtenue à l'issue de l'étape e) peut être mise en place dans sa position de service sans avoir été frittée. Le frittage, effectué *in situ,* conduit alors à un produit fritté selon l'invention constitué d'un granulat lié par une matrice.

A la fin du frittage, on obtient un produit fritté selon l'invention présentant une porosité ouverte réduite et des résistances à l'écrasement à froid et à la flexion à froid remarquables. Plus précisément, le produit fritté peut présenter une résistance à l'écrasement à froid supérieure ou égale à 50 MPa, voire supérieure à 100 MPa, voire supérieure à 150 MPa. La forme d'un bloc fritté selon l'invention n'est pas limitative.

Le bloc fritté peut ainsi présenter au moins une dimension (épaisseur, longueur, longueur transversale hors tout ou largeur) d'au moins 120 mm, de préférence d'au moins 150 mm, voire 200 mm, voire 300 mm, voire 400 mm, voire 600 mm ou même 800 mm, voire encore 1000 mm. L'épaisseur, la longueur et la largeur du bloc fritté peuvent être d'au moins 120 mm, voire 150 mm, voire 300 mm, voire 400 mm, 600 mm ou même 800 mm, voire encore 1000 mm.

Un produit selon l'invention peut également être utilisé pour fabriquer des produits minces.

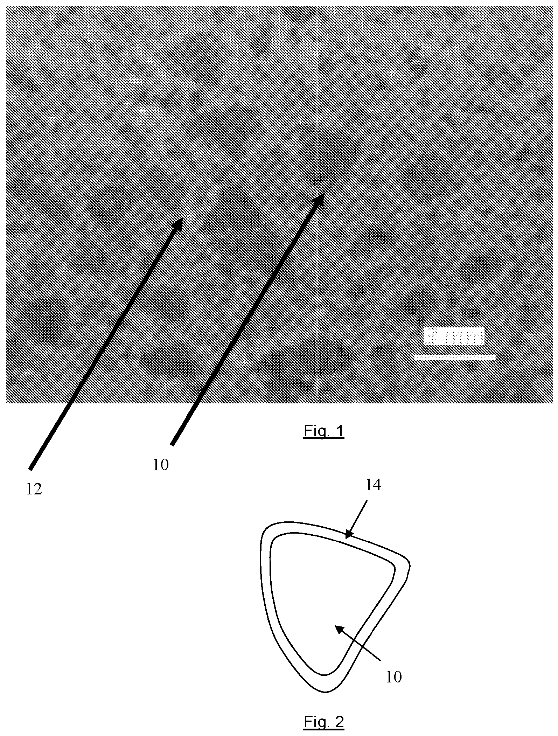

Comme représenté sur la figure 1, la microstructure d'un produit selon l'invention est spécifique. En particulier, elle comporte classiquement des grains 10 liés par une matrice 12.

On aperçoit, autour des grains 10, une couche 14. La nature de cette couche d'enrobage n'a pas été identifiée, mais, selon les inventeurs, elle est spécifique au produit selon l'invention.

La couche enrobant les grains améliore la cohésion entre les grains et la matrice azotée.

Sans être liés par une théorie, les inventeurs expliquent la présence de cette couche par la très bonne répartition de l'alumine réactive autour des grains.

L'épaisseur moyenne de cette couche est de préférence comprise entre 100 et 300 $\mu$m.

En-dessous de 100 $\mu$m (microns) l'amélioration de la résistance mécanique du produit est faible et au-dessus de 300 $\mu$m (microns) le produit est très homogène mais présente une porosité ouverte plus élevée.

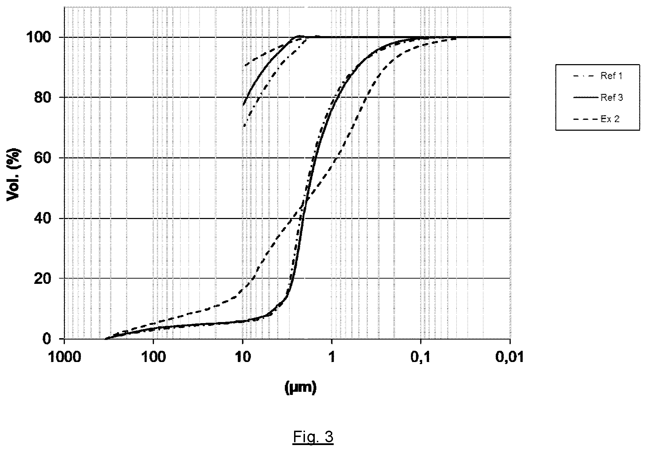

La caractérisation en porosimétrie au mercure met également en évidence une distribution des pores spécifique (voir figure 3). En particulier, les pores d'une taille comprise entre environ 5 et 100 $\mu$m (microns) sont relativement plus nombreux dans un produit selon l'invention que dans un produit selon la technique antérieure.

De manière remarquable, la figure 3 montre également que le volume de la fraction des pores présentant une taille comprise entre 10 et 100 $\mu$m (microns) est supérieure à 4%, voire supérieure à 7% du volume total des pores, cette fraction étant mesurée par porosimétrie par intrusion de mercure à 2000 bar, comme expliqué ci-dessus. Typiquement, le volume des pores dont la taille est comprise entre 10 et 100 $\mu$m (microns) est compris entre 6 et 15% du volume total de pores mesuré.

Selon la figure 3, on observe que la courbe de remplissage ou intrusion et celle d'extrusion forment une hystérésis. Dans l'exemple 2 selon l'invention, 90% du Mercure reste dans la porosité de l'échantillon après extrusion au retour à la pression de 1 bar. Le volume de mercure extrudé est donc de 10%. Ceci traduit une structure poreuse très différente de celle du produit de l'exemple de référence 1 qui présente un volume de mercure extrudé de 30%.

Les inventeurs considèrent que les caractéristiques de porosimétrie ou la présence d'une couche enrobant les grains sont des signatures d'un procédé selon l'invention.

De manière remarquable, un produit selon l'invention présente une résistance mécanique à la compression à froid supérieure à 200 MPa, de préférence supérieure à 220 MPa, de préférence supérieure à 230 MPa, de préférence supérieure à 240 MPa, de préférence supérieure à 250 MPa, de préférence supérieure à 260 MPa.

La fabrication de plusieurs éprouvettes de produit selon l'invention à partir d'une même charge de départ montre que la dispersion des mesures de résistance mécanique à la compression à froid est faible, typiquement inférieure à 30%, voire inférieure à 25%, inférieure à 20%, ou même inférieure à 17% (la dispersion, en pourcentage, étant le rapport entre l'écart type et la moyenne).

Par ailleurs, un dopage à l'yttrium est avantageux pour la résistance à l a corrosion par les alcalins. Sans être limité par cette théorie, les inventeurs expliquent les résultats obtenus par la capacité de l'yttrium à neutraliser l'alumine résiduelle, en particulier pour former une phase YAG, phase qui est particulièrement stable.

L'ajout de lanthane a également un effet similaire à l'ajout d'yttrium.

## **Exemples**

### **Préparation des mélanges**

Les exemples suivants, fabriqués selon les étapes a) à f) précédemment décrites, sont fournis à des fins illustratives et ne limitent aucunement l'invention.

Des blocs ont été fabriqués suivant les étapes a) à f) du procédé décrit précédemment. Une charge de départ a été fabriquée par malaxage à sec des différents constituants ajoutés sous forme de poudres. L'eau a été ensuite progressivement ajoutée dans le malaxeur en fonctionnement afin d'obtenir un mélange d'une consistance adaptée pour la mise en forme.

Les matières suivantes ont été utilisées :

- granulat de corindon brun A1 à 97% d'alumine $Al_2O_3$ dont toutes les particules présentent un diamètre médian supérieur à 2 mm et inférieur à 5 mm,
- granulat de corindon brun A2 à 97% d'alumine $Al_2O_3$, dont toutes les particules présentent un diamètre médian supérieur à 1 mm et inférieur à 3 mm,
- granulat de corindon brun A3 à 97% d'alumine $Al_2O_3$, dont toutes les particules présentent un diamètre médian supérieur à 0,1 mm et inférieur à 1 mm,
- alumine tabulaire grade - 48 mesh (0-0,5 mm)
- alumine calcinée présentant un diamètre médian d'environ 6 $\mu$m (microns),
- alumine réactive présentant un diamètre médian d'environ 0,5 $\mu$m (microns),
- poudre d'aluminium métal d'un diamètre médian inférieur à 75 $\mu$m (microns),
- poudre de silicium métal d'un diamètre médian inférieur à 75 $\mu$m (microns),
- poudre de carbure de silicium d'un diamètre médian inférieur à 1 $\mu$m (micron) fournie par Saint-Gobain Materials,
- agents de mise en forme : agent liant de type dextrine et agent plastifiant de type Hydroxyéthylcellulose fourni par la société Aqualon,
- poudre de $B_4C$ d'un diamètre médian inférieur à 75 $\mu$m (microns), fabriquée par la société DENKA,
- poudre d'oxyde d'Yttrium (>99,99% $Y_2O_3$ en masse) de diamètre médian de 5 $\mu$m (microns) environ fournie par Altichem,
- poudre d'oxyde de Lanthane (>99,99% $La_2O_3$ en masse) de diamètre médian de 5 $\mu$m (microns) environ fournie Altichem.

Les formulations des charges de départ pour les différents exemples de référence et selon l'invention sont présentées dans les tableaux ci-après.

L'exemple « réf. 2 » correspond à un exemple de produit réfractaire à matrice SiAlON dopé Bore tel que décrit dans WO 2011 070524.

Chaque produit est obtenu en mélangeant les grains de corindon brun avec les agents de mise en forme durant 1 min suivi de l'ajout de l'eau (pendant 3 min) et enfin de l'ajout des poudres fines, précurseurs de la matrice (Al métal , Si métal, Alumines, oxyde d'Yttrium, oxyde de Lanthane, Carbure de Bore selon la formulation) pour une durée de 15 min en malaxeur intensif Eirich RV02. L'humidité du mélange obtenu de l'ordre de 3,2%.

La température du mélange reste inférieure à 40°C en surface du mélange. Si le malaxage est trop intensif la température en fin de malaxage peut être supérieure, ce qui traduit une possible activation des poudres métalliques.

Une étape de pressage hydraulique uni-axial avec une contrainte de 700 kgf/cm$^2$ a été appliquée à la charge de départ dans le moule, afin de la compacter. La taille des blocs réalisée est 120*100*400 mm.

Tous les blocs ont ensuite été démoulés puis soumis à un séchage à 110°C sous air de manière à ce que l'humidité résiduelle diminue en deçà de 0,2%. Enfin, les blocs séchés ont subi une cuisson sous azote à 1470°C pendant au moins 10 heures.

**Caractérisation et tests**

Différentes analyses ont été réalisées sur les blocs ainsi réalisés dont les résultats sont présentés dans les tableaux suivants.

La porosité ouverte a été mesurée selon la norme ISO 5017.

Les teneurs en azote élémentaire (N) dans les produits frittés ont été mesurées au moyen d'analyseurs LECO (LECO TC 436DR ; LECO CS 300). Les valeurs sont fournies en pourcentages massiques.

Le silicium résiduel est mesuré selon la méthode connue de l'homme du métier et référencée sous ANSI B74-151992 (R2000).

Les phases cristallisées, notamment les phases cristallisées azotées ont été mesurées par diffraction aux rayons X et quantifiées selon la méthode de Rietveld.

La résistance mécanique à la compression à froid, en MPa, a été mesurée suivant la norme NFB-40-322. L'écart-type mesure la dispersion par rapport à la valeur moyenne.

La distribution volumique de taille de pores telle que représentée sur la figure 3, la fraction volumique de pores entre 10 et 100 $\mu$m (microns) notamment, et les volumes de pores $V_i$ et $V_e$ ont été mesurés à l'aide d'un porosimètre à mercure Autopore IV série 9500 Micromeritics selon la méthode décrite précédemment.

Des éprouvettes prélevées dans ces blocs ont par ailleurs été soumises à des tests de corrosion et d'oxydation : Dans ces tests, le produit de référence est « Réf. 1 » dans le tableau 2.

Le test "A" de corrosion dynamique, de type "doigt plongeant", a été effectué en plaçant des éprouvettes de dimensions 25 x 25 x 180 mm$^3$ en rotation à une vitesse linéaire de 2 cm par seconde, dans un liquide contenant du laitier de haut-fourneau et de la fonte liquide, à 1550°C, pendant 4 heures sous Argon. Le degré d'attaque est évalué en mesurant la perte d'épaisseur d'une éprouvette, en pourcentage de l'épaisseur initiale (25 mm). La mesure s'effectue au pied à coulisse au niveau de l'interface fonte-laitier. Plus la perte d'épaisseur est proche de zéro, et plus le produit est réputé stable, et meilleur en application. Les tableaux suivants fournissent le rapport entre ce pourcentage et le pourcentage obtenu, pour ce test, avec le produit de référence, ce rapport étant multiplié par 100 :

$$\frac{100 * \text{résultat au test A de l'exemple testé}}{\text{résultat au test A de du produit de référence}}$$

Le résultat au test A est donc 100 pour le produit de référence. Un résultat inférieur à 100 indique une meilleure résistance à la corrosion dynamique que le produit de référence.

Le test "B" d'oxydation a été effectué sur des éprouvettes de 25 x 25 x 70 mm$^3$, sous vapeur d'eau, à une température de 1100°C, pendant 72 heures, selon la norme ASTM C863. La stabilité à l'oxydation s'évalue, en mesurant la variation de longueur des barreaux, entre avant et après test d'oxydation, exprimée en pourcentage de la longueur initiale. Plus la variation de longueur est proche de zéro, et plus le produit est réputé stable, et meilleur en application. Les tableaux suivants fournissent le rapport entre ce pourcentage et le pourcentage obtenu, pour ce test, avec le produit de référence, ce rapport étant multiplié par 100. Le résultat au test B est donc 100 pour le produit de référence. Un résultat inférieur à 100 indique une meilleure résistance à l'oxydation que le produit de référence.

Le test de corrosion "C", dit "Bethleem Steel test", est un test d'application développé par l'entreprise sidérurgique américaine Bethleem Steel en vue de caractériser la stabilité de matériaux réfractaires soumis à une corrosion alcaline telle que celle rencontrée dans le garnissage de hauts-fourneaux. Ce test consiste à soumettre un jeu de barreaux réfractaires de 25*25*150 mm$^3$ à une corrosion de $K_2CO_3$ (carbonate de potassium) sous lit de coke, en ambiance confinée. A l'intérieur d'une gazette en acier réfractaire, les barreaux sont ensevelis sous une couche de $K_2CO_3$, puis cette couche est recouverte de coke présentant un diamètre médian d'environ 1 mm. La gazette est scellée par un couvercle réfractaire afin de maintenir une atmosphère réductrice pendant toute la phase de cuisson corrodante. La cuisson dure 6 heures à 925°C. A l'issue de la cuisson, les barreaux corrodés sont récupérés, lavés, séchés, puis on mesure leurs longueurs. Les variations de longueur sont exprimées en pourcentage des longueurs initiales, c'est-à-dire mesurées avant la cuisson. Plus la variation de longueur est proche de zéro, et plus le produit est réputé stable, et meilleur en application. Les tableaux suivants fournissent le rapport entre ce pourcentage et le pourcentage obtenu, pour ce test, avec le produit de référence, ce rapport étant multiplié par 100. Le résultat au test C est donc 100 pour le produit de référence. Un résultat inférieur à 100 indique une meilleure résistance à la corrosion alcaline que le produit de référence.

Le test « D » est un test de tenue au cyclage thermique sévère. Dans ce test (DIN-51068), des échantillons cylindriques (h=50mm et Ø=50mm) sont préalablement séchés à 110°C pendant une demi-heure puis mis dans un four à 950°C pendant un quart d'heure. Ces cylindres sont ensuite trempés dans un bac d'eau à température ambiante pendant environ 5 minutes. Les cylindres sont replacés directement dans l'étuve pour séchage 30 min avant d'être remis dans le four de manière à recommencer un deuxième cycle de trempe à l'eau. L'opération se poursuit ainsi jusqu' à effectuer 30 cycles si cela est possible. Durant tous les cycles, chaque échantillon peut-être observé et l'oeil permet d'identifier facilement l'apparition de fissures externes. Le nombre maximal de cycles correspond au nombre de cycles successifs que le matériau peut supporter sans se désolidariser en plus de deux morceaux.

Les seuils de détection "SD" dépendent des appareils de mesure mis en œuvre. Ces seuils sont les suivants :

- pour la diffraction X, méthode Rietveld : 0,5%,

    - pour l'analyse chimique par fluorescence X : 0,05%, pour tous les éléments autres que Si résiduel,
    - pour le LECO (Azote, carbone) : 0,05%,

- pour le silicium résiduel: < 0,01%.

On considère que la matrice correspond à tout ce qui n'apparaît pas comme du corindon par une analyse de phase en DRX.

Les tableaux suivants résument les essais effectués et les résultats obtenus. Plus précisément, le tableau 1 fournit la composition des charges de départ mises en œuvre, ainsi que la densité des préformes, et le tableau 2 fournit les caractéristiques des produits obtenus, ainsi que l'évaluation de leurs performances.

Tableau 1

| | Réf. 1 | Réf. 2 | Réf. 3 | Ex1 | Ex2 | Ex3 | Ex4 | Ex5 | Ex 6 | Ex7 | Ex8 | Ex9 Comp. | Ex10 Comp. | Ex11 |
|---|---|---|---|---|---|---|---|---|---|---|---|---|---|---|
| **Charge particulaire de base (en pourcentages massiques)** | | | | | | | | | | | | | | |
| Granulat : Mélange de grains de Corindon brun A1 | 25 | 25 | 25 | - | - | - | - | - | - | - | - | - | - | - |
| Granulat : Mélange de grains de Corindon brun A2 | 45 | 45 | 45 | 45 | 45 | 45 | 45 | 45 | 45 | 45 | 68 | 73 | 68 | 41 |
| Granulat : Mélange de grains de Corindon brun A3 | 7 | 7 | 10 | 23 | 23 | 23 | 23 | 23 | 23 | 23 | - | - | - | 21 |
| Alumine tabulaire -48 mesh | - | - | - | 5 | 5 | 5 | 5 | 5 | 5 | 5 | 5 | - | 5 | 13,5 |
| Poudre d'alumine calcinée | 12,7 | 12,7 | 9,5 | - | - | - | - | - | - | - | - | - | 13,1 | - |
| Poudre d'alumine réactive | - | - | - | 13,1 | 13,1 | 13,1 | 13,1 | 13,1 | 13,1 | 13,1 | 13,1 | 13,1 | - | 11,9 |
| Silicium métal | 5 | 5 | 8 | 10,8 | 10,8 | 10,8 | 10,8 | 10,8 | 10,8 | 10,8 | 10,8 | 10,8 | 10,8 | 9,8 |
| Aluminium métal | 5,3 | 5,3 | 2,5 | 3,1 | 3,1 | 3,1 | 3,1 | 3,1 | 3,1 | 3,1 | 3,1 | 3,1 | 3,1 | 2,8 |
| **Total** | **100** | **100** | **100** | **100** | **100** | **100** | **100** | **100** | **100** | **100** | **100** | **100** | **100** | **100** |
| Ajout de poudre B$_4$C (D$_{50}$<1 μm (micron)) | - | +1,0 | - | - | - | - | - | - | - | - | - | - | - | - |
| Ajout d'oxyde d'yttrium | - | - | - | - | +0,2 | +1,0 | +2,0 | +5,0 | - | +1,0 | - | - | - | - |
| Autre ajout d'oxyde de Lanthane | - | - | - | - | - | - | - | - | +0,2 | - | - | - | - | - |
| **Ajouts à la charge particulaire de base (en pourcentages massiques sur la base de la charge particulaire de base)** | | | | | | | | | | | | | | |
| Agent liant | +0,5 | +0,5 | +0,5 | +0,5 | +0,5 | +0,5 | +0,5 | +0,5 | +0,5 | +0,5 | +0,5 | +0,5 | +0,5 | +0,5 |
| Agent plastifiant | +0,3 | +0,3 | +0,3 | +0,3 | +0,3 | +0,3 | +0,3 | +0,3 | +0,3 | +0,3 | +0,3 | +0,3 | +0,3 | +0,3 |
| Eau | +3,2 | +3,2 | +3,2 | +3,8 | +3,8 | +3,8 | +3,8 | +3,8 | +3,8 | +3,8 | +3,8 | +3,8 | +3,8 | +3,8 |
| Densité de la préforme humide (g/cm³) | 3,19 | 3,17 | 3,18 | 3,11 | 3,10 | 3,11 | 3,11 | 3,13 | 3,09 | 3,08 | 3,07 | 3,09 | 2,99 | 3,06 |

Tableau 2

| | Réf. 1 | Réf. 2 | Réf., 3 | | Ex1 | Ex2 | Ex 3 | Ex 4 | Ex 5 | Ex 6 | Ex7 | Ex8 | Ex9 Comparatif | Ex10 Comparatif | Ex11 |
|---|---|---|---|---|---|---|---|---|---|---|---|---|---|---|---|
| **Analyse chimique et cristallographique du produit fritté (matrice + granulat) en pourcentages massique** | | | | | | | | | | | | | | | |
| $Al_2O_3$ | 88 | 88 | 86,5 | | 84,9 | 78,4 | 84,9 | 81,8 | 79,6 | 82,1 | 81,4 | - | - | - | - |
| Azote (LECO) | 5,0 | 4,6 | 6,0 | | 5,4 | 6,7 | 6,5 | 6,4 | 6,4 | 6,6 | 6,1 | - | - | - | - |
| $Y_2O_3$ | <0,02 | <0,02 | <0,02 | | <0,02 | 0,09 | 0,53 | 1,27 | 4,35 | <0,02 | <0,02 | - | - | - | - |
| $La_2O_3$ | <0,02 | <0,02 | <0,02 | | <0,02 | <0,02 | <0,02 | <0,02 | <0,02 | 0,10 | 0,72 | - | - | - | - |
| Silicium résiduel | <0,1 | <0,1 | <0,1 | | <0,1 | <0,1 | <0,1 | <0,1 | <0,1 | 0,14 | 0,11 | - | - | - | - |
| Bore | <0,01 | 0,45 | <0,05 | | <0,02 | <0,02 | <0,02 | <0,02 | <0,02 | <0,02 | <0,02 | - | - | - | - |
| Corindon | 80 | 80 | 81 | | 78 | 77 | 76 | 75 | 71 | 78 | 77 | - | - | - | - |
| $\beta$'SiAlON | 15 | 15 | 19 | | 22 | 23 | 23 | 23 | 23 | 22 | 23 | - | - | - | - |
| Si2ON2 ou AlN | <SD | <SD | <SD | | <SD | <SD | <SD | <SD | <SD | <SD | <SD | | | | |
| Phase du type AlN15R | 5 | 5 | <SD | | <SD | <SD | <SD | <SD | <SD | <SD | <SD | - | - | - | - |
| $\alpha$-SiC (%) | <SD | <SD | <SD | | <SD | <SD | <SD | <SD | <SD | <SD | <SD | - | - | - | - |
| $Al_5Y_3O_{12}$ | <SD | <SD | <SD | | <SD | <SD | 1 | 2 | 6 | <SD | <SD | - | - | - | - |
| $LaAl_{11}O_{18}$ | <SD | <SD | <SD | | <SD | <SD | <SD | <SD | <SD | <SD | Trace | - | - | - | - |
| **Caractéristiques physique du produit fritté** | | | | | | | | | | | | | | | |
| Masse volumique apparente (g/cm³) | 3,20 | 3,20 | 3,20 | | 3,25 | 3,24 | 3,23 | 3,25 | 3,23 | 3,23 | 3,21 | 3,19 | 3,19 | 3,12 | 3,15 |
| Porosité ouverte (%) | 14,5 | 13,5 | 14,5 | | 12,2 | 11,9 | 12,6 | 12,3 | 13,6 | 12,5 | 13,7 | 14,0 | 14,1 | 15,6 | 15,2 |
| Fraction des pores (intrusion Hg) de taille 10$\mu$m-100$\mu$m | <3% | <3% | <3% | | 11% | 10% | 6% | 12% | 15% | | | | | | |
| $V_e$*100/$V_i$ (Volume de Mercure extrudé sur le volume de Mercure introduit après un cycle d'intrusion-extrusion) en % | 30 | | 22 | | 15 | 10 | 8 | 9 | 13 | | | | | | |

EP 3 052 455 B1

(suite)

| Caractéristiques physique du produit fritté | | | | | | | | | | | | | | |
|---|---|---|---|---|---|---|---|---|---|---|---|---|---|---|
| Résistance mécanique à la à froid compression (MPa) | 160 | 156 | 150 | | 230 | 265 | 220 | 230 | 230 | 240 | 240 | 214 | 197 | 154 | 240 |
| Dispersion (en %) | 30 | 28 | 30 | | 22 | 15 | 19 | 20 | 22 | 28 | 25 | 24 | 25 | 18 | 29 |
| Résultats aux tests | | | | | | | | | | | | | | |
| Test A | 100 | 102 | 115 | | 95 | 94 | 115 | 112 | 126 | 102 | 105 | 113 | 130 | 120 | 105 |
| Test B (oxydation) | 100 | 69 | 70 | | 92 | 20 | 65 | 87 | 106 | 52 | 116 | 70 | 103 | 97 | 130 |
| Test C | 100 | 22 | 70 | | 31 | 14 | 23 | 17 | 13 | 38 | 19 | 30 | 90 | 60 | 28 |
| Somme des résultats aux tests A, B et C | 300 | 193 | 255 | | 218 | 128 | 203 | 216 | 245 | 192 | 240 | 213 | 323 | 277 | 263 |
| Test D | >30 | 16 | >30 | | >30 | >30 | >30 | >30 | >30 | >30 | >30 | >30 | >30 | >30 | >30 |

Le tableau 2 montre que les exemples selon l'invention (exemples 1 à 8 et 11) présentent une résistance mécanique à la compression à froid très élevée, une bonne résistance au cyclage thermique (test D), et une résistance à la corrosion dans les applications visées, évaluée par la somme des résultats aux tests A, B et C, remarquable, voire excellente en ce qui concerne la résistance à l'attaque par les produits alcalins, avec, au test C, des résultats inférieurs à 50.

L'exemple de référence 2 présente également d'excellentes performances, mais présente une tenue au cyclage thermique beaucoup plus faible que celle des produits selon l'invention. En outre, sa résistance mécanique n'est pas améliorée.

Certains produits selon l'invention présentent des performances au test A de résistance à la corrosion dynamique à la fonte et au laitier qui sont inférieures à celles des produits de référence. Ces produits présentent néanmoins une résistance mécanique largement supérieure, et offrent, pour les applications visées, un compromis entre résistance mécanique et résistance à la corrosion amélioré.

Les produits des exemples 2 à 4, dopés à l'yttrium, présentent les meilleures résistances à la corrosion. L'exemple 5, qui comporte 4,35% d'oxyde d'yttrium, présente cependant une résistance à la corrosion aux tests A et B qui est inférieure à celle des autres exemples dopés à l'yttrium.

Les produits des exemples 6 et 7, dopés au lanthane, présentent, avec les exemples 2 et 11, les meilleures résistances mécaniques. Leur résistance à la corrosion est excellente, en particulier pour l'exemple 6 qui comporte 0,10% d'oxyde de lanthane.

Une comparaison des exemples selon l'invention 8 et comparatif 10 illustre l'effet remarquable de la présence d'alumine réactive dans la charge de départ.

En particulier, cette comparaison montre l'effet technique associé à la substitution de l'alumine calcinée par de l'alumine réactive.

Une comparaison des exemples selon l'invention 8 et comparatif 9 illustre l'effet remarquable de la présence d'alumine tabulaire dans la charge de départ en association avec la présence d'alumine réactive, pour l'ensemble des propriétés.

La comparaison de l'exemple 11 vis-à-vis de l'exemple 1 montre que malgré un indice de résistance à la corrosion global aux tests A+B+C acceptable, la résistance à l'oxydation est dégradée lorsque la quantité d'alumine tabulaire dans le mélange augmente excessivement.

Une comparaison de l'exemple 8 avec les autres exemples selon l'invention montre également qu'il est préférable que la charge de départ comporte des grains de diamètre compris entre 0,1 et 1 mm.

La comparaison avec les exemples de référence montre en particulier l'importance de limiter le diamètre maximal du granulat.

Comme cela apparaît clairement à présent, l'invention fournit un produit réfractaire qui présente un excellent compromis entre la résistance à la corrosion, la résistance au cyclage thermique, et la résistance mécanique. Les tests montrent que ce produit est parfaitement adapté aux applications visées.

Bien entendu, l'invention n'est pas limitée aux modes de réalisation décrits, fournis à titre illustratif et non limitatif.

En particulier, un produit fritté selon l'invention peut servir dans d'autres applications que les hauts-fourneaux, par exemple comme revêtement d'un four servant à la fusion de métaux, comme revêtement anti-abrasion ou dans un échangeur thermique.

**Revendications**

**1.** Produit réfractaire fritté constitué de :

- un granulat constitué par l'ensemble des particules présentant une taille supérieure à 100 $\mu$m, ou « grains », et
- une matrice liant lesdits grains, ladite matrice étant constituée des particules présentant une taille inférieure ou égale à 100 $\mu$m, ou « particules fines », ladite matrice comprenant au moins une phase SiAlON cristallisée de formule $Si_xAl_yO_uN_v$, dans laquelle

- x est supérieur à 0, supérieur à 0,05, supérieur à 0,1 ou supérieur à 0,2, et inférieur ou égal à 1, inférieur ou égal à 0,8 ou inférieur ou égal à 0,4 ;
- y est supérieur à 0, ou supérieur à 0,1, supérieur à 0,3 ou supérieur à 0,5, et inférieur ou égal à 1 ;
- u est supérieur à 0, supérieur à 0,1 ou supérieur à 0,2, et inférieur ou égal à 1 ou inférieur ou égal à 0,7 ;
- v est supérieur à 0, supérieur à 0,1, supérieur à 0,2 ou supérieur à 0,5, ou supérieur à 0,7, et inférieur ou égal à 1 ;

au moins un des indices stoechiométriques x, y, u et v étant égal à 1,

**caractérisé en ce que**

le granulat représente entre 55% et 85% en masse du produit, la taille maximale des grains étant inférieure à 3,5 mm,

le volume de la fraction des pores présentant une taille comprise entre 10 $\mu$m et 100 $\mu$m (microns) étant supérieur à 4% du volume total des pores,

produit dans lequel lorsque le produit est soumis à une intrusion de mercure à une pression de 2000 bar, puis à une extrusion de ce mercure par réduction de la pression jusqu'à 1 bar, $V_i$ désignant le volume de mercure introduit sous 2000 bar et $V_e$ indiquant le volume de mercure extrudé lors du retour à la pression de 1 bar, le rapport $V_e$ divisé par $V_i$ en pourcentage est inférieur à 20%.

2. Produit selon la revendication précédente, comportant entre 1% et 20% en masse de grains d'alumine tabulaire présentant une taille inférieure à 0,5 mm, en pourcentage massique sur la base du produit.

3. Produit selon l'une quelconque des revendications précédentes, obtenu par frittage d'une préforme dans laquelle plus de 5% en masse des particules sont des particules d'alumine présentant un diamètre inférieur à 1 $\mu$m, en pourcentage massique sur la base de la matière minérale sèche.

4. Produit selon l'une quelconque des revendications précédentes, obtenu par frittage d'une préforme dans laquelle plus de 10% en masse des particules sont des particules d'alumine présentant un diamètre inférieur à 1 $\mu$m.

5. Produit selon l'une quelconque des revendications précédentes, obtenu par frittage d'une préforme dans laquelle plus de 10% en masse des particules sont des particules d'alumine présentant un diamètre inférieur à 0,5 $\mu$m.

6. Produit selon l'une quelconque des revendications précédentes, présentant une teneur en un élément choisi dans le groupe constitué par Y, Yb, La, Gd, Dy, Er, Ce, Nd, Pr, Sm, supérieure à 0,02%, en pourcentage massique sur la base du produit.

7. Produit selon l'une quelconque des revendications précédentes, dans lequel la teneur en ladite phase SiAlON dans le produit est supérieure à 7%, et dans lequel la teneur en phase AlN, dans le produit, est inférieure à 5%, en pourcentages en masse sur la base dudit produit.

8. Produit selon l'une quelconque des revendications précédentes, dans lequel

- x> 0,05 et/ou u > 0,1, et/ou
- la teneur en alumine est supérieure à 70% et inférieure à 90%, et/ou
- la teneur en élément azote est supérieure à 2% et inférieure à 10%, et/ou
- la teneur en $Y_2O_3$ est supérieure à 0,05% et inférieure à 3%, et/ou
- la teneur en $La_2O_3$ est supérieure à 0,05% et inférieure à 0,5%, et/ou
- la teneur en silicium métallique est inférieure à 1,0%, et/ou
- la teneur en élément bore est inférieure à 0,4%, et/ou
- la teneur en phase de formule $Si_{x''}Al_{y''}O_{u''}N_{v''}$, dans laquelle les indices stœchiométriques, normalisés par rapport à l'indice le plus élevé, sont tels que $0,43 \le x'' \le 0,75$ et $0 \le y'' \le 1$ et $0 < u'' \le 1$ et $0,9 \le v'' \le 1$, dite « $\beta$'SiAlON », est supérieure à 15%, et/ou
- la teneur en phase de formule $Si_{x'}Al_{y'}O_{u'}N_{v'}$, dans laquelle les indices stœchiométriques, normalisés par rapport à l'indice le plus élevé, sont tels que $0,12 \le x' \le 0,33$ et $0,78 \le y' \le 1$ et $0,33 \le u' \le 0,55$ et $0,80 \le v' \le 1$, dite du type « AlN15R », est inférieure à 3%, et/ou
- la teneur en phases des polytypes de l'AlN, notamment 2H, 8H, 12H, 15R, 21R, et 27R, de formule $Si_{x'}Al_{y'}O_{u'}N_{v'}$, dans laquelle les indices stœchiométriques x', y', u' et v', normalisés, sont tels que $0 \le x' \le 0,37$ et $0,60 \le y' \le 1$ et $0 \le u' \le 0,71$ et $0,76 \le v' \le 1$, est supérieure à 1% et inférieure ou égale à 6%, et/ou
- la teneur en phase $Si_3N_4$ est inférieure à 3%, et/ou
- la teneur en phase AlN est inférieure à 3%, et/ou
- la teneur en phase $Si_2ON_2$ est inférieure à 3%, et/ou

en pourcentages massiques sur la base du produit.

9. Produit selon l'une quelconque des revendications précédentes, dans lequel l'alumine, le silicium métallique, et ladite phase SiAlON cristallisée de formule $Si_xAl_yO_uN_v$, représentent ensemble plus de 80% de la masse de la matrice.

**10.** Produit selon l'une quelconque des revendications précédentes, dans lequel la matrice est obtenue par frittage réactif.

**11.** Produit selon l'une quelconque des revendications précédentes, ledit produit comportant plus de 0,5% et/ou moins de 10%, de particules fines de SiC, en pourcentages en masse sur la base du produit.

**12.** Produit selon l'une quelconque des revendications 1 à 10, dans lequel la matrice comporte des particules de carbure de silicium SiC dispersées, les particules de SiC présentant une taille médiane comprise entre 0,1 $\mu$m et 100 $\mu$m (microns).

**13.** Produit selon l'une quelconque des revendications 1 à 10, dans lequel le granulat comporte des grains de carbure de silicium SiC, ledit produit comprenant plus de 5% de grains de SiC, en pourcentage en masse sur la base du produit.

**14.** Procédé de fabrication d'un produit fritté selon l'une quelconque des revendications 1 à 13, comportant les étapes successives suivantes :

a) préparation d'une charge de départ comportant plus de 5% de silicium métallique et entre 5% et 20% d'une poudre de particules d'alumine réactive présentant un diamètre médian inférieur à 3 $\mu$m, en pourcentage massique sur la base de la masse minérale sèche, et mélange à une température maintenue inférieure à 70°C,
b) versement de ladite charge de départ dans un moule ;
c) mise en forme de la charge de départ à l'intérieur du moule, par compaction, de manière à former une préforme présentant une humidité comprise entre 2,5% et 5,0% ;
d) démoulage de ladite préforme ;
e) optionnellement, séchage de la préforme, de préférence de manière jusqu'à ce que l'humidité résiduelle soit comprise entre 0 et 0,5% ;
f) cuisson de la préforme sous atmosphère réductrice d'azote ou sous atmosphère non oxydante si de l'azote est apporté par la charge de départ, de préférence à une température comprise entre 1300 et 1600°C, de manière à obtenir ledit produit fritté.

**15.** Procédé selon la revendication immédiatement précédente, dans lequel, à l'étape a), la charge de départ comporte entre 1% et 15% d'une poudre de particules d'alumine tabulaire, en pourcentage massique sur la base de la masse minérale sèche.

**16.** Procédé selon l'une quelconque des deux revendications immédiatement précédentes, dans lequel, à l'étape a), on ajoute à la charge de départ

- moins de 5%, d'une poudre de particules d'alumine calcinée présentant un diamètre médian inférieur à 20 $\mu$m (microns) et supérieur à 1 $\mu$m (micron) ; et/ou
- plus de 5% et moins de 20% de silicium métallique ; et/ou
- plus de 1% et moins de 10% d'aluminium métallique ; et/ou
- plus de 0,1% et moins de 5% yttrium exprimé sous forme d'oxyde ; et/ou
- plus de 0,1% et moins de 5% de lanthane exprimé sous forme d'oxyde,

en pourcentage massique sur la base de la masse minérale sèche.

**17.** Dispositif comportant un produit selon l'une quelconque des revendications 1 à 13, et choisi parmi :

- un revêtement intérieur réfractaire d'un four ;
- un cubilot destiné à la refonte de métaux ou à la fusion de roches ;
- un revêtement d'un échangeur thermique ;
- un revêtement d'un incinérateur d'ordures ménagères ;
- un revêtement anti-abrasion ;
- une pièce céramique intervenant dans un dispositif de protection ou de régulation des jets de fonte ou d'acier ;
- une pièce céramique intervenant dans un dispositif de brassage, soit mécanique, soit par insufflation de gaz, dans le métal en fusion ;
- une brique de siège servant de logement et de support à un dispositif d'insufflation de gaz ou à un dispositif d'insufflation de régulation d'un jet de métal,
- une dalle d'impact de poche ou de répartiteur ;

- un étalage, une ceinture d'une tuyère, un creuset, un ventre, une cuve d'un haut-fourneau ;
- une busette, un tampon ou un déversoir pour la fonderie de la fonte, de l'acier et des aciers spéciaux ;
- un support pour la cuisson de produits céramiques ou de poudres métalliques.

**18.** Dispositif selon la revendication précédente, choisi parmi un revêtement intérieur réfractaire d'un haut-fourneau.

**Patentansprüche**

**1.** Gesintertes feuerfestes Erzeugnis, das aus Folgendem besteht:

- einem Granulat, das aus einer Gesamtheit von Partikeln mit einer Größe von mehr als 100 $\mu$m oder "Körnern" besteht, und
- einer Matrix, welche die Körner bindet, wobei die Matrix aus Partikeln, die eine Größe kleiner als oder gleich 100 $\mu$m aufweisen, oder "Feinpartikeln" besteht, wobei die Matrix mindestens eine kristallisierte SiAlON-Phase der Formel $Si_xAl_yO_uN_v$ umfasst, wobei
- x größer als 0, größer als 0,05, größer als 0,1 oder größer als 0,2 und kleiner als oder gleich 1, kleiner als oder gleich 0,8 oder kleiner als oder gleich 0,4 ist;
- y größer als 0 oder größer als 0,1, größer als 0,3 oder größer als 0,5 und kleiner als oder gleich 1 ist;
- u größer als 0, größer als 0,1 oder größer als 0,2 und kleiner als oder gleich 1 oder kleiner als oder gleich 0,7 ist;
- v größer als 0, größer als 0,1, größer als 0,2 oder größer als 0,5 oder größer als 0,7 und kleiner als oder gleich 1 ist;
mindestens einer der stöchiometrischen Indices x, y, u und v gleich 1 ist,
**dadurch gekennzeichnet, dass** das Granulat zwischen 55 Masse-% und 85 Masse-% des Erzeugnisses darstellt, wobei die maximale Größe der Körner kleiner als 3,5 mm ist,
das Volumen des Anteils der Poren mit einer Größe zwischen 10 $\mu$m und 100 $\mu$m (Mikrometer) größer als 4 % des gesamten Volumens der Poren ist,
wobei im Erzeugnis, wenn es einer Quecksilberintrusion bei einem Druck von 2000 bar und dann einer Extrusion dieses Quecksilbers durch eine Verminderung des Drucks auf 1 bar unterzogen wird, wobei $V_i$ das Volumen des unter 2000 bar eingeführten Quecksilbers bezeichnet und $V_e$ das Volumen des Quecksilbers bedeutet, das bei der Rückkehr auf einen Druck von 1 bar extrudiert wird, das Verhältnis $V_e$ dividiert durch $V_i$ in Prozent kleiner als 20 % ist.

**2.** Erzeugnis nach dem vorhergehenden Anspruch, das zwischen 1 Masse-% und 20 Masse-% tafelförmige Aluminiumoxid-Körner mit einer Größe von weniger als 0,5 mm, in Masseprozent, bezogen auf das Erzeugnis, aufweist.

**3.** Erzeugnis nach einem der vorhergehenden Ansprüche, das durch das Sintern eines Vorformlings erhalten wird, wobei mehr als 5 Masse-% der Partikel Aluminiumoxid-Partikel sind, die einen Durchmesser von weniger als 1 $\mu$m, in Masseprozent, bezogen auf die Trockensubstanz, aufweisen.

**4.** Erzeugnis nach einem der vorhergehenden Ansprüche, das durch das Sintern eines Vorformlings erhalten wird, wobei mehr als 10 Masse-% der Partikel Aluminiumoxid-Partikel mit einem Durchmesser von weniger als 1 $\mu$m sind.

**5.** Erzeugnis nach einem der vorhergehenden Ansprüche, das durch das Sintern eines Vorformlings erhalten wird, wobei mehr als 10 Masse-% der Partikel Aluminiumoxid-Partikel mit einem Durchmesser von weniger als 0,5 $\mu$m sind.

**6.** Erzeugnis nach einem der vorhergehenden Ansprüche, das einen Gehalt eines Elements, das ausgewählt ist aus der Gruppe bestehend aus Y, Yb, La, Gd, Dy, Er, Ce, Nd, Pr, Sm, von mehr als 0,02 %, in Masseprozent, bezogen auf das Erzeugnis, aufweist.

**7.** Erzeugnis nach einem der vorhergehenden Ansprüche, wobei der Gehalt der SiAlON-Phase im Produkt mehr als 7 % beträgt und wobei der Gehalt der AlN-Phase im Produkt weniger als 5 %, in Masseprozent, bezogen auf das Erzeugnis, beträgt.

**8.** Erzeugnis nach einem der vorhergehenden Ansprüche, wobei

- x > 0,05 und/oder u > 0,1 und/oder
- der Aluminiumoxid-Gehalt größer als 70 % und kleiner als 90 % ist und/oder

- der Gehalt des Elements Stickstoff größer als 2 % und kleiner als 10 % ist und/oder
- der $Y_2O_3$-Gehalt größer als 0,05 % und kleiner als 3 % ist und/oder
- der $La_2O_3$-Gehalt größer als 0,05 % und kleiner als 0,5 % ist und/oder
- der Gehalt an metallischem Silicium kleiner als 1,0 % ist und/oder
- der Gehalt des Elements Bor kleiner als 0,4 % ist und/oder
- der Gehalt der als "β'SiAlON" bezeichneten Phase der Formel $Si_{x''}Al_{y''}O_{u''}N_{v''}$, wobei die stöchiometrischen Indices, normalisiert auf den höchsten Index, so sind, dass $0,43 \leq x'' \leq 0,75$ und $0 \leq y'' \leq 1$ und $0 < u'' \leq 1$ und $0,9 \leq v'' \leq 1$, größer als 15 % ist, und/oder
- der Gehalt der als "AlN15R"-Typ bezeichneten Phase der Formel $Si_{x'}Al_{y'}O_{u'}N_{v'}$, wobei die stöchiometrischen Indices, normalisiert auf den höchsten Index, so sind, dass $0,12 \leq x' \leq 0,33$ und $0,78 \leq y' \leq 1$ und $0,33 \leq u' \leq 0,55$ und $0,80 \leq v' \leq 1$, kleiner als 3 % ist, und/oder
- der Gehalt der Phasen von AlN-Polytypen, insbesondere 2H, 8H, 12H, 15R, 21R und 27R, der Formel $Si_{x'}Al_{y'}O_{u'}N_{v'}$, wobei die normalisierten stöchiometrischen Indices x', y', u' und v' so sind, dass $0 \leq x' \leq 0,37$ und $0,60 \leq y' \leq 1$ und $0 \leq u' \leq 0,71$ und $0,76 \leq v' \leq 1$, größer als 1 % und kleiner als oder gleich 6 % ist, und/oder
- der Gehalt der $Si_3N_4$-Phase kleiner als 3 % ist und/oder
- der Gehalt der AlN-Phase kleiner als 3 % ist und/oder
- der Gehalt der $Si_2ON_2$-Phase kleiner als 3 % ist und/oder

in Masseprozent, bezogen auf das Erzeugnis.

9. Erzeugnis nach einem der vorhergehenden Ansprüche, wobei das Aluminiumoxid, das metallische Silicium und die kristallisierte SiAlON-Phase der Formel $Si_xAl_yO_uN_v$ zusammen mehr als 80 % der Masse der Matrix darstellen.

10. Erzeugnis nach einem der vorhergehenden Ansprüche, wobei die Matrix durch Reaktionssintern erhalten wird.

11. Erzeugnis nach einem der vorhergehenden Ansprüche, wobei das Erzeugnis mehr als 0,5 % und/oder weniger als 10 % SiC-Feinpartikel, in Masseprozent, bezogen auf das Erzeugnis, aufweist.

12. Erzeugnis nach einem der Ansprüche 1 bis 10, wobei die Matrix dispergierte Partikel von Siliciumcarbid, SiC, aufweist, wobei die SiC-Partikel eine mediane Größe zwischen 0,1 $\mu$m und 100 $\mu$m (Mikrometer) aufweisen.

13. Erzeugnis nach einem der Ansprüche 1 bis 10, wobei das Granulat Körner von Siliciumcarbid, SiC, aufweist, wobei das Erzeugnis mehr als 5 % SiC-Körner, in Masseprozent, bezogen auf das Erzeugnis, umfasst.

14. Verfahren zur Herstellung eines gesinterten Erzeugnisses nach einem der Ansprüche 1 bis 13, das die folgenden aufeinanderfolgenden Schritte umfasst:

a) die Herstellung eines Einsatzmaterials, das mehr als 5 % metallisches Silicium und zwischen 5 % und 20 % eines Pulvers von Partikeln aus reaktivem Aluminiumoxid mit einem medianen Durchmesser von weniger als 3 $\mu$m, in Masseprozent, bezogen auf die trockene mineralische Masse, aufweist, und das Mischen bei einer unterhalb von 70 °C gehaltenen Temperatur,
b) das Schütten des Einsatzmaterials in eine Form;
c) das Formen des Einsatzmaterials im Inneren der Form durch Verdichten so, dass ein Vorformling gebildet wird, der einen Feuchtigkeitsgehalt zwischen 2,5 % und 5,0 % aufweist;
d) das Herausnehmen des Vorformlings aus der Form;
e) gegebenenfalls das Trocknen des Vorformlings, vorzugsweise, bis die Restfeuchtigkeit zwischen 0 und 0,5 % beträgt;
f) das Brennen des Vorformlings in einer reduzierenden Stickstoff-Atmosphäre oder in einer nicht oxidierenden Atmosphäre, wenn der Stickstoff vom Einsatzmaterial zugeführt wird, vorzugsweise bei einer Temperatur zwischen 1300 und 1600 °C, wodurch das gesinterte Erzeugnis erhalten wird.

15. Verfahren nach dem unmittelbar vorhergehenden Anspruch, wobei in Schritt a) das Einsatzmaterial zwischen 1 % und 15 % eines Puders von tafelförmigen Aluminiumoxid-Partikeln, in Masseprozent, bezogen auf die trockene mineralische Masse, aufweist.

16. Verfahren nach einem der unmittelbar vorhergehenden zwei Ansprüche, wobei in Schritt a) Folgendes zum Einsatzmaterial gegeben wird:

- weniger als 5 % eines Pulvers von Partikeln aus kalziniertem Aluminiumoxid mit einem medianen Durchmesser von weniger als 20 $\mu$m (Mikrometer) und mehr als 1 $\mu$m (Mikrometer) und/oder
- mehr als 5 % und weniger als 20 % metallisches Silicium und/oder
- mehr als 1 % und weniger als 10 % metallisches Aluminium und/oder
- mehr als 0,1 % und weniger als 5 % Yttrium, ausgedrückt als Oxidform; und/oder
- mehr als 0,1 % und weniger als 5 % Lanthan, ausgedrückt als Oxidform,

in Masseprozent, bezogen auf die trockene mineralische Masse.

**17.** Vorrichtung, die ein Erzeugnis nach einem der Ansprüche 1 bis 13 aufweist und ausgewählt ist aus:

- einer feuerfesten Innenbeschichtung eines Ofens;
- einem Kupolofen, der für das Umschmelzen von Metallen oder das Schmelzen von Gesteinen vorgesehen ist;
- einer Beschichtung eines Wärmetauschers;
- einer Beschichtung eines Hausmüllverbrennungsofens;
- einer abriebfesten Beschichtung;
- einem Keramikteil, das an einer Vorrichtung zum Schutz oder zur Regulierung von Gusseisen- oder Stahlstrahlen beteiligt ist;
- einem Keramikteil, das an einer Rühreinrichtung, entweder mechanisch oder durch Einblasen von Gas in das flüssige Metall, beteiligt ist;
- einem Lochstein, der zur Aufnahme und Lagerung einer Vorrichtung zum Einblasen von Gas oder einer Einblasvorrichtung zur Regulierung eines Gießstrahls dient,
- einer Taschen- oder Verteiler-Prallplatte;
- einer Rast, eines Gürtels einer Düse, eines Schmelztiegels, eines Kohlensacks, einer Wanne eines Hochofens;
- einem Gießrohr, einem Stopfen oder einem Überlauf zum Gießen von Gusseisen, Stahl und legierten Stählen;
- einer Halterung zum Erhitzen von Keramikerzeugnissen oder metallischen Pulvern.

**18.** Vorrichtung nach dem vorhergehenden Anspruch, die aus einer feuerfesten Innenbeschichtung eines Hochofens ausgewählt ist.

**Claims**

**1.** Sintered refractory product constituted of:

- a granulate constituted by all of the particles with a size of greater than 100 $\mu$m, or "grains", and
- a matrix binding said grains, said matrix being constituted of particles with a size of less than or equal to 100 $\mu$m, or "fine particles", said matrix comprising at least one crystalline SiAlON phase of formula $Si_xAl_yO_uN_v$, in which
- x is greater than 0, greater than 0.05, greater than 0.1 or greater than 0.2, and less than or equal to 1, less than or equal to 0.8 or less than or equal to 0.4;
- y is greater than 0, or greater than 0.1, greater than 0.3 or greater than 0.5, and less than or equal to 1;
- u is greater than 0, greater than 0.1 or greater than 0.2, and less than or equal to 1 or less than or equal to 0.7;
- v is greater than 0, greater than 0.1, greater than 0.2 or greater than 0.5, or greater than 0.7, and less than or equal to 1;
at least one of the stoichiometric indices x, y, u and v being equal to 1,
**characterized in that** the granulate represents between 55% and 85% by mass of the product, the maximum size of the grains being less than 3.5 mm,
the volume of the fraction of pores with a size of between 10 $\mu$m and 100 $\mu$m (microns) being greater than 4% of the total pore volume,
in which product, when the product is subjected to mercury intrusion at a pressure of 2000 bar, and then to extrusion of this mercury by reduction of the pressure to 1 bar, $V_i$ denoting the volume of mercury introduced at 2000 bar and $V_e$ indicating the volume of mercury extruded during the return to the pressure of 1 bar, the ratio of $V_e$ divided by $V_i$, as a percentage, is less than 20%.

**2.** Product according to the preceding claim, comprising between 1% and 20% by mass of grains of tabular alumina with a size of less than 0.5 mm, as a mass percentage on the basis of the product.

**3.** Product according to any one of the preceding claims, obtained by sintering a preform in which more than 5% by mass of the particles are alumina particles with a diameter of less than 1 $\mu$m, as a mass percentage on the basis of the dry mineral material.

4. Product according to any one of the preceding claims, obtained by sintering a preform in which more than 10% by mass of the particles are alumina particles with a diameter of less than 1 $\mu$m.

5. Product according to any one of the preceding claims, obtained by sintering a preform in which more than 10% by mass of the particles are alumina particles with a diameter of less than 0.5 $\mu$m.

6. Product according to any one of the preceding claims, having a content of an element chosen from the group constituted by Y, Yb, La, Gd, Dy, Er, Ce, Nd, Pr and Sm of greater than 0.02%, as a mass percentage on the basis of the product.

7. Product according to any one of the preceding claims, in which the content of said SiAlON phase in the product is greater than 7%, and in which the content of AlN phase, in the product, is less than 5%, as mass percentages on the basis of said product.

8. Product according to any one of the preceding claims, in which

- x > 0.05 and/or u > 0.1, and/or
- the content of alumina is greater than 70% and less than 90%, and/or
- the content of nitrogen element is greater than 2% and less than 10%, and/or
- the content of $Y_2O_3$ is greater than 0.05% and less than 3%, and/or
- the content of $La_2O_3$ is greater than 0.05% and less than 0.5%, and/or
- the content of silicon metal is less than 1.0%, and/or
- the content of boron element is less than 0.4%, and/or
- the content of phase of formula $Si_{x"}Al_{y"}O_{u"}N_{v"}$, in which the stoichiometric indices, normalized relative to the highest index, are such that $0.43 \leq x" \leq 0.75$ and $0 \leq y" \leq 1$ and $0 < u" \leq 1$ and $0.9 \leq v" \leq 1$, referred to as "$\beta$'SiAlON", is greater than 15%, and/or
- the content of phase of formula $Si_{x'}Al_{y'}O_{u'}N_{v'}$, in which the stoichiometric indices, normalized relative to the highest index, are such that $0.12 \leq x' \leq 0.33$ and $0.78 \leq y' \leq 1$ and $0.33 \leq u' \leq 0.55$ and $0.80 \leq v' \leq 1$, referred to as "AlN15R", is less than 3%, and/or
- the content of phases of the AlN polytypes, especially 2H, 8H, 12H, 15R, 21R and 27R, of formula $Si_{x'}Al_{y'}O_{u'}N_{v'}$, in which the stoichiometric indices x', y', u' and v', normalized, are such that $0 \leq x' \leq 0.37$ and $0.60 \leq y' \leq 1$ and $0 \leq u' \leq 0.71$ and $0.76 \leq v' \leq 1$, is greater than 1% and less than or equal to 6%, and/or
- the content of $Si_3N_4$ phase is less than 3%, and/or
- the content of AlN phase is less than 3%, and/or
- the content of $Si_2ON_2$ phase is less than 3%, and/or as mass percentages on the basis of the product.

9. Product according to any one of the preceding claims, in which the alumina, the silicon metal and said crystalline SiAlON phase of formula $Si_xAl_yO_uN_v$, together represent more than 80% of the mass of the matrix.

10. Product according to any one of the preceding claims, in which the matrix is obtained by reactive sintering.

11. Product according to any one of the preceding claims, said product comprising more than 0.5% and/or less than 10% of fine SiC particles, as mass percentages on the basis of the product.

12. Product according to any one of Claims 1 to 10, in which the matrix comprises dispersed silicon carbide SiC particles, the SiC particles having a median size of between 0.1 $\mu$m and 100 $\mu$m (microns).

13. Product according to any one of Claims 1 to 10, in which the granulate comprises grains of silicon carbide SiC, said product comprising more than 5% of SiC grains, as a mass percentage on the basis of the product.

14. Process for manufacturing a sintered product according to any one of Claims 1 to 13, comprising the following successive steps:

a) preparing a starting feedstock comprising more than 5% silicon metal and between 5% and 20% of a powder of reactive alumina particles with a median diameter of less than 3 $\mu$m, as a mass percentage on the basis of the dry mineral mass, and mixing at a temperature maintained below 70°C,

b) pouring said starting feedstock into a mould;

c) forming the starting feedstock inside the mould, by compaction, so as to form a preform with a moisture content of between 2.5% and 5.0%;

d) removing said preform from the mould;

e) optionally, drying the preform, preferably until the residual moisture content is between 0 and 0.5%;

f) firing the preform under a reductive atmosphere of nitrogen or under a non-oxidative atmosphere if nitrogen is supplied by the starting feedstock, preferably at a temperature of between 1300°C and 1600°C, so as to obtain said sintered product.

15. Process according to the immediately preceding claim, in which, in step a), the starting feedstock comprises between 1% and 15% of a powder of tabular alumina particles, as a mass percentage on the basis of the dry mineral mass.

16. Process according to any one of the two immediately preceding claims, in which, in step a) the following are added to the starting feedstock:

- less than 5% of a powder of calcined alumina particles with a median diameter of less than 20 $\mu$m (microns) and greater than 1 $\mu$m (micron); and/or
- more than 5% and less than 20% of silicon metal; and/or
- more than 1% and less than 10% of aluminium metal; and/or
- more than 0.1% and less than 5% of yttrium expressed in oxide form; and/or
- more than 0.1% and less than 50 of lanthanum expressed in oxide form,

as a mass percentage on the basis of the dry mineral mass.

17. Device comprising a product according to any one of Claims 1 to 13, and chosen from:

- a refractory inner lining of a furnace;
- a cupola furnace intended for remelting metals or for melting rocks;
- a coating of a heat exchanger;
- a coating of a household refuse incinerator;
- an anti-abrasion coating;
- a ceramic component included in a device for protecting or regulating streams of cast iron or steel;
- a ceramic component included in an agitation device, either of mechanical or gas-injection type, for agitation in the molten metal;
- a seating block serving as a housing and support for a gas-injection device or for an injection device for regulating a metal stream;
- an impact tile for ladles or tundishes;
- a bosh, a tuyere belt, a hearth, a belly, a stack of a blast furnace;
- a nozzle, a stopper or a spout for foundries for cast iron, steel and special steels;
- a support for firing ceramic products or metal powders.

18. Device according to the preceding claim, chosen from a refractory inner lining of a blast furnace.

Fig. 1

Fig. 2

Fig. 3

## RÉFÉRENCES CITÉES DANS LA DESCRIPTION

**Documents brevets cités dans la description**

- US 4533646 A
- US 3991166 A
- US 4243621 A
- EP 0153000 A
- EP 0482984 A
- WO 9615999 A
- WO 2011070524 A
- EP 0735988 A
- JP H07165462 B
- WO 02074419 A
- US 5521129 A
- EP 0242849 A
- JP 07126072 B
- US 4871698 A
- JP 07069744 B

**Littérature non-brevet citée dans la description**

- **THOMMY EKSTRÖM** ; **MATS NYGREN**. SiAlON Ceramics. *J. Am. Soc.*, 1992, vol. 75 (2), 259-76